(19) Europäisches Patentamt
European Patent Office
Office européen des brevets

(11) **EP 2 311 600 B1**

(12) **EUROPEAN PATENT SPECIFICATION**

(45) Date of publication and mention
of the grant of the patent:
**10.10.2012 Bulletin 2012/41**

(51) Int Cl.:
***B23Q 1/64*** *(2006.01)*      ***B24B 3/06*** *(2006.01)*
***B24B 3/26*** *(2006.01)*

(21) Application number: **08791312.5**

(22) Date of filing: **18.07.2008**

(86) International application number:
**PCT/JP2008/063003**

(87) International publication number:
**WO 2010/007685 (21.01.2010 Gazette 2010/03)**

(54) **MACHINE TOOL AND METHOD OF ADJUSTING SAID MACHINE TOOL**

WERKZEUGMASCHINE UND VERFAHREN ZUR EINSTELLUNG DER WERKZEUGMASCHINE

MACHINE-OUTIL ET PROCÉDÉ DE RÉGLAGE DE LA MACHINE-OUTIL

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**20.04.2011 Bulletin 2011/16**

(73) Proprietor: **Waida MFG. Co., Ltd.**
**Takayama City, Gifu 506-0824 (JP)**

(72) Inventors:
• **FUJII, Keita**
**Takayama City**
**Gifu 506-0824 (JP)**

• **KITAMURA, Hiroshi**
**Takayama City**
**Gifu 506-0824 (JP)**

(74) Representative: **Schatt, Markus F.**
**Schatt IP**
**Patent- und Rechtsanwaltskanzlei**
**Rindermarkt 7**
**80331 München (DE)**

(56) References cited:
**JP-A- 3 256 632      JP-A- 7 060 622
JP-A- 8 118 234      JP-A- 10 094 949
JP-A- 2001 353 645   JP-A- 2002 292 534
JP-A- 2003 145 326**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a machine tool according to the preamble of claim 1, and an adjustment method of machine tools according to the preamble of claim 15, more particularly, to centering adjustment of a workpiece of a tool grinder that grinds and machines a minute diameter end mill or the like.

There is a growing need for tools for ultra-precision machining such as minute diameter end mills, which have a tool diameter of approximately 0.01 to 1.00 mm, and tools with even more precision are demanded. To machine and form such a minute diameter tool, a round bar-like workpiece formed of cemented carbide or high-speed tool steel is mounted in a work head of a tool grinder. The workpiece is then rotated about the axis and grinded so that a tool of a desired shape is obtained.

In this case, if the workpiece is supported in a cantilever manner by a collet chuck or the like, support of the workpiece becomes unstable. This causes chattering in the workpiece when the workpiece is ground. In other words, the workpiece cannot be ground with high accuracy. To solve the problem, as disclosed in JP 8-118 234 A which forms the basis for the preamble of claim 1 and the preamble of claim 6, the distal end of a workpiece is mounted on a V block having a V groove from above so that both ends of the workpiece are supported. This suppresses chattering of the workpiece, leading to highly accurate grinding.

"Mecha-Idea Dictionary" (Pages 94 to 95, Part II of five volumes, published on 16, December, 1993, edited by Nikkei Mechanical, published by Nikkei Business Publications, Inc.) discloses correction of a conventional precision machining collet chuck. That is, to prevent the axis of a workpiece from being displaced from the axis of a spindle of a lathe when the workpiece is maintained in a held state, the correction is performed by grinding the inner circumference of a collet by means of the lathe to which a chuck is secured. To facilitate such correction, the collet is formed of soft alloy such as aluminum alloy.

However, swarf enters the interior of the collet, thus damaging the inner circumference of the collet. This decreases the securing accuracy of the workpiece. To solve the problem, "Mecha-Idea Dictionary" proposes a collet chuck having a chuck body and a distortion absorbing sleeve, which is provided independently from the chuck body. The distortion absorbing sleeve includes a tapered portion and an adjustment mechanism that decenters the collet. The distortion absorbing sleeve absorbs displacement of the collet caused by decentering of the collet.

JP 2003-145 326 A discloses a floating chuck that absorbs displacement between the axis of a workpiece and the axis of a spindle that holds the workpiece.

As has been described, several methods have been proposed to increase the machining accuracy. However, in the recent trends of ultra-precision machining on the order of sub micrometers to several tens of micrometers, the following problems occur.

The V block described in JP 8-118 234 A is theoretically considered to exhibit high accuracy in the range of roughness of the slidable surface of the workpiece. However, actually, the axis of the workpiece supported by the V block may be displaced from the axis of the spindle. Such offset axes cause slight runout of the workpiece each time the workpiece rotates. It is difficult to suppress such runout.

As of the method disclosed in "Mecha-Idea Dictionary", destabilization of the workpiece cannot be avoided as long as the workpiece is supported in the cantilever manner. Further, supporting the distal end of the workpiece by the V block causes displacement between the axis of the spindle and the axis of the workpiece. Slight runout, which is caused by such displacement, is hard to suppress.

Seemingly, it is assumed that the aforementioned problem involved in supporting in the cantilever manner is solved if the floating chuck holds the workpiece and the V block supports the workpiece. That is, it seems that the workpiece is supported stably and accurately by means of the floating chuck, which absorbs the displacement of the axis of the workpiece with respect to the axis of the spindle.

However, in reality, as described in JP 2003-145 326 A, the floating chuck is configured complicatedly and thus becomes large-sized and has an extremely great mass. Specifically, the floating chuck is designed to ensure flexible positioning of the axis of the workpiece and an extremely large operating margin so that the floating chuck can adapt to any type of displacement and inclination. The floating chuck is originally aimed to eliminate the need of position adjustment of the axis of the workpiece. Accordingly, a conventional machining tool having a floating chuck is not designed to adjust the position of the axis of the workpiece in advance and thus does not include a mechanism for such adjustment, which makes it impossible to carry out the adjustment. Therefore, if a machining tool having the conventional floating chuck in combination with the V block machines a workpiece, the movement range of the floating mechanism becomes large and, as a result, rotation of the workpiece may be imbalanced or great inertia may be caused. That is, the conventional floating chuck directly causes runout of the workpiece. Accordingly, conventional arts cannot possibly achieve the objective of the present invention, which is to suppress slight runout of a workpiece in ultra-precision machining.

Accordingly, it is an objective of the present invention to provide an adjustment method that enables rotation of a round bar-like workpiece while suppressing runout of the axis of the workpiece in ultra-precision machining by a machine tool, and a machining tool used in the adjustment method.

To achieve the foregoing objective, the present invention provides an adjustment method of a machine tool according to claim 1 and a machine tool according to claim 6.

In the adjustment method provided by the present invention, the machine tool includes a workpiece spindle that is driven to rotate and a workpiece holding mechanism that holds a round bar-like workpiece. The workpiece has a workpiece axis, which is the axis of the workpiece, and a projecting portion that projects from the workpiece holding mechanism when the workpiece is held by the workpiece holding mechanism. The projecting portion has a side surface encompassing the workpiece axis. The machine tool also includes a floating mechanism that is adapted to transmit rotation of the workpiece spindle to the workpiece holding mechanism. The floating mechanism is adapted to support the workpiece holding mechanism in such a manner as to permit the workpiece holding mechanism to move relative to the workpiece spindle. The machine tool further includes a workpiece axis fixing portion, a support member, a support position adjustment portion, and a support locking portion. The workpiece axis fixing portion is adapted to fix the position of the workpiece axis at a desired position with respect to the workpiece spindle by temporarily restricting the floating mechanism. The support member is adapted to rotatably support the side surface of the workpiece when the workpiece holding mechanism holds the workpiece. The support position adjustment portion is adapted to adjust the position at which the support member supports the workpiece. The support locking portion is adapted to press the workpiece in such a manner that the workpiece is pressed against the support member, thereby maintaining a state in which the support member determines the position of the workpiece axis.

The adjustment method provided by the present invention includes: an axis position adjustment procedure in which runout of the side surface of the workpiece is measured while rotating the workpiece spindle with the workpiece holding mechanism holding the workpiece and the support member not holding the workpiece, and the workpiece axis fixing portion is adjusted in such a manner that the runout is minimized; a support adjustment procedure in which the support position adjustment portion is adjusted in such a manner that the support member supports the workpiece while the position of the workpiece axis is fixed with respect to the workpiece spindle by means of the workpiece axis fixing portion; a support locking procedure in which the workpiece is pressed by the support locking portion after the support adjustment procedure; and a floating restriction cancelling procedure in which restriction on the floating mechanism by the workpiece axis fixing portion is cancelled after the support locking procedure.

In this case, the axis of the workpiece and the axis of the workpiece spindle are caused to substantially coincide with each other by the axis position adjustment procedure, while the restricting the function of the floating mechanism. Further, in the support adjustment procedure, the position of the support member is adjusted in such a manner as to support the workpiece at the position where the axes coincide with each other. The position of the workpiece, which is supported by the support member, is then maintained by the support locking procedure. In this state, in the floating restriction cancelling procedure, the restriction on floating is cancelled so as to provide floating function.

As a result, the support member is located at such a position that the axis of the workpiece and the axis of the workpiece spindle coincide with each other. The floating mechanism absorbs slight displacement. Since required movement of the floating mechanism is significantly small after this stage, inertia causing runout in the workpiece hardly occurs.

Since only slight movement is required for the floating mechanism, a highly accurate and stable floating mechanism that is small in size and light in weight is employed. The workpiece is thus further stably supported.

The machine tool preferably includes a tool spindle table and a dial gauge removably attached to the tool spindle table. The axis position adjustment procedure preferably includes: reading a maximum value and a minimum value of a measurement value of the dial gauge in one rotation of the workpiece spindle by measuring the position of the side surface of the workpiece using the dial gauge; and adjusting a radial position of the workpiece with respect to the workpiece spindle in such a manner that the measurement value becomes equal to the average of the maximum value and the minimum value.

In this case, by arranging the dial gauge in a tool spindle table that can be finely moved without being influenced by movement of the workpiece spindle, displacement of the workpiece is measured using a machine tool. By measuring the absolute position of the workpiece in this manner, the direction in which the workpiece is displaced is determined. Adjustment is then performed to cancel the displacement. As a result, the axis of the workpiece and the axis of the workpiece spindle are adjusted to coincide with each other. By repeating the procedure, the axis of the workpiece and the axis of the workpiece spindle are allowed to coincide with each other further accurately.

The adjustment method preferably includes horizontal adjustment performed after the floating restriction cancelling procedure The axis of the workpiece spindle is referred to as a spindle axis. The horizontal adjustment includes: obtaining a measurement value before reverse rotation by measuring the position of the side surface of the workpiece (W) in a horizontal direction with respect to the spindle axis; rotating the workpiece spindle in a reverse direction in such a manner that the spindle axis is rotated in the reverse direction by 180 degrees; obtaining a measurement value after the reverse rotation by measuring the position of the side surface of the workpiece (W) after the reverse rotation; and moving the support member (91) in the horizontal direction in such a manner that the measurement value becomes equal to the average of the measurement value before the reverse rotation and the measurement value after the reverse rotation.

In this case, the workpiece spindle is rotated about an axis perpendicular to the spindle axis by rotating the workpiece spindle by 180 degrees. This decreases the influence by displacement between the spindle axis and the rotational axis.

The maximum value and the minimum value are preferably measured at a distal end of the workpiece.

In this case, measurement is performed at the distal end of the workpiece at which, generally, displacement is most likely to occur and accuracy is most required. This improves the accuracy of the tool to be formed.

A test piece having a target accuracy in advance is preferably employed instead of the workpiece.

In this case, by using the test piece with high accuracy instead of the workpiece, an actual machining target, adjustment is performed with further enhanced accuracy.

The machine tool provided by the present invention includes a workpiece spindle that is driven to rotate, a workpiece holding mechanism, a floating mechanism, a workpiece axis fixing portion, a support member, a support position adjustment portion, and a support locking portion. The workpiece holding mechanism is adapted to hold a round bar-like workpiece. The workpiece has a workpiece axis, which is the axis of the workpiece, and a projecting portion that projects from the workpiece holding mechanism when the workpiece is held by the workpiece holding mechanism. The projecting portion has a side surface encompassing the workpiece axis. The floating mechanism is adapted to transmit rotation of the workpiece spindle to the workpiece holding mechanism. The floating mechanism is adapted to support the workpiece holding mechanism in such a manner as to permit the workpiece holding mechanism to move relative to the workpiece spindle. The workpiece axis fixing portion is adapted to fix the position of the workpiece axis at a desired position with respect to the workpiece spindle by temporarily restricting the floating mechanism. The support member is adapted to rotatably support the side surface of the workpiece. The support position adjustment portion is adapted to adjust the position at which the support member supports the workpiece. The support locking portion is adapted to press the workpiece in such a manner that the workpiece is pressed against the support member, thereby maintaining a state in which the support member determines the position of the workpiece axis.

In this case, the above-described method may be carried out effectively.

The workpiece axis fixing portion preferably includes a plurality of screws provided in the workpiece spindle in such a manner that the screws are arranged on a circumference encompassing the workpiece holding mechanism. Each of the screws contacts the workpiece holding mechanism by proceeding from the workpiece spindle toward the workpiece axis. Each screw is preferably adapted to be rotated to adjust the amount by which the screw proceeds from the workpiece spindle toward the workpiece axis, so as to be switchable between a state in which change of the position of the workpiece holding mechanism relative to the workpiece spindle is permitted and a state in which the change of the position is restricted.

In this case, adjustment may be carried out in any radial direction about the workpiece axis. Also, by employing the screw, the mechanism is simplified, the mass is decreased, and the size is reduced. This facilitates the adjustment.

The workpiece spindle preferably includes a spindle groove, which is a linear groove extending parallel with a line perpendicular to the spindle axis. The workpiece holding mechanism includes a holding groove, which is a linear groove extending parallel with a line perpendicular to the workpiece axis. The floating mechanism includes a cross guide, which is a plate-like member. The cross guide includes a first cross surface and a second cross surface located opposite to the first cross surface. The first cross surface has a first cross groove facing the spindle groove. The second cross surface includes a second cross groove facing the holding groove. The second cross groove extends perpendicular to the first cross groove as viewed in the direction of the workpiece axis. The floating mechanism further includes a plurality of first cross balls aligned linearly in the first cross groove and a plurality of second cross balls aligned linearly in the second cross groove. Movement of the workpiece axis in a direction perpendicular to the spindle axis is preferably permitted through rolling of the first cross balls and the second cross balls.

In this case, despite the compact configuration, the rotational force of the workpiece spindle is reliably transmitted to the workpiece holding mechanism. Also, the workpiece holding mechanism can be moved in any direction perpendicular to the axis of the workpiece without being inclined. Particularly, by forming the plate-like member by a disk-like member, the weight is balanced effectively.

The spindle groove, the holding groove, the first cross groove, and the second cross groove are preferably V grooves each having a V-shaped cross section.

In this case, the cross balls, which roll, are positioned stably. The rotational force is thus uniformly transmitted and smooth floating function is ensured.

The first cross surface preferably includes a plurality of rows of the first cross grooves, and the second cross surface preferably includes a plurality of rows of the second cross grooves.

In this case, the V grooves prevent inclination of the workpiece spindle, the cross guide, and the workpiece holding mechanism relative to one another. This also disperses the rotational force acting on each of the grooves.

The floating mechanism preferably includes a first spindle surface, a second spindle surface, a first holding surface, a second holding surface, a plurality of first preloaded balls, a plurality of second preloaded balls, and an urging portion. The first spindle surface and the second spindle surface are formed in the workpiece spindle. The first spindle surface and the second spindle surface are each a flat surface. The first holding surface and the second holding surface are formed in the workpiece holding mechanism. The first holding surface and the second holding surface each extends perpendicular to the workpiece axis. The first preloaded balls are arranged between the first holding surface and the first spindle surface. The second preloaded balls are arranged between the second holding surface and the second spindle surface. The urging portion is provided in the workpiece spindle. The urging portion being adapted to urge the first preloaded balls and the second preloaded balls so as to support the workpiece holding mechanism. The workpiece holding mechanism is permitted to move only in a direction perpendicular to the workpiece axis relative to the workpiece spindle.

In this case, the balls arranged on the relatively parallel surfaces, which are, for example, stainless steel balls with high circularity, are preloaded. This suppresses inclination of the workpiece and improves the dimension accuracy of the workpiece spindle in the axial direction.

The first spindle surface, the second spindle surface, the first holding surface, and the second holding surface each preferably have an annular shape. The first preloaded balls are arranged annularly and the second preloaded balls are arranged annularly.

In this case, the circular arrangement of the balls allows the workpiece to be supported without inclination. This also allows the workpiece to be moved in any direction perpendicular to the spindle axis and the axis of the workpiece spindle and rotation of the axis of the workpiece holding mechanism to rotate relative to each other.

The urging portion is preferably a screw, and the urging force by which the screw urges the first preloaded balls and the second preloaded balls are preferably adjustable.

In this case, by forming the urging portion by the screw, the balls are urged by stable urging force despite the compact configuration. Further, by providing the adjustment portion, the balls are preloaded to a proper level. This ensures smooth floating and high dimension accuracy.

The machine tool preferably further includes an oil seal formed by an annular elastic body arranged between the workpiece spindle and the workpiece holding mechanism. The oil seal preferably is adapted to apply a centripetal force to the workpiece holding mechanism in such a manner that the axis of the workpiece holding mechanism approaches the spindle axis.

In this case, the centripetal force provided by the oil seal is capable of causing the axis of the workpiece to substantially coincide with the axis of the workpiece spindle. As a result, the adjustment range of the floating mechanism is reduced so that the floating mechanism is adjusted quickly. The reduced adjustment range of the floating range also decreases the margin of the floating mechanism. Particularly, the balls are arranged in the annular manner on a smaller plane. The floating mechanism becomes small-sized and light in weight.

The support member is preferably configured by a V block having a V groove.

In this case, the round bar-like workpiece is stably supported at the accurate position.

The machine tool is suitably used as the tool grinder.

In this case, by adjusting the tool grinder by the adjustment method of the present invention, which is effective in formation of a tool, a tool with high accuracy is provided.

The workpiece is suitably used as a workpiece of an end mill or a drill.

In this case, the end mill or the drill, which are now particularly used in ultraprecision machining, are formed with high accuracy.

The tool diameter of the distal end of the end mill or the drill preferably falls in the range of 0.001 mm to 6.00 mm.

The shank diameter of the end mill or the drill preferably falls in the range of 0.5 mm to 6 mm.

The adjustment method according to the present invention ensures high machining accuracy. As a result, the invention is significantly suitable for the end mill or the drill having the shank diameter of the aforementioned range. This provides an end mill with high accuracy or a drill with high accuracy, which are used in ultraprecision machining.

Fig. 1 is a perspective view showing the outline of a tool grinder according to one embodiment of the present invention;

Fig. 2 is a perspective view showing a main portion of the machine tool illustrated in Fig. 1;

Fig. 3 is a cross-sectional view showing a work head illustrated in Fig. 2;

Fig. 4 is an enlarged cross-sectional view showing the work head illustrated in Fig. 3;

Fig. 5 is a cross-sectional view showing components of the work head illustrated in Fig. 4 in detail;

Fig. 6 is an exploded perspective view showing a workpiece holding mechanism illustrated in Fig. 5;

Fig. 7 is an exploded perspective view showing a floating assembly illustrated in Fig. 5;

Fig. 8(a) is a front view showing a cross guide illustrated in Fig. 7;

Fig. 8(b) is a side view showing the cross guide;

Fig. 8(c) is a rear view showing the cross guide;

Fig. 9 is an exploded perspective view showing a preload mechanism and a collet clamping mechanism illustrated in Fig. 5;

Fig. 10 is a perspective view showing a C-axis adjustment screw and a case illustrated in Fig. 5;

Fig. 11 is an exploded perspective view showing a portion of a collet opening and closing portion illustrated in Fig. 5;

Fig. 12 is an exploded perspective view showing a main portion of the work head illustrated in Fig. 5;

Fig. 13 is an exploded perspective view showing a main portion of a support device illustrated in Fig. 3;

Fig. 14 is an enlarged cross-sectional view showing the support device illustrated in Fig. 3;

Fig. 15 is a front view as viewed from the direction of the C axis, showing the support device illustrated in Fig. 14;

Fig. 16 is an enlarged view showing the support device illustrated in Fig. 14 in a state where the workpiece is released from supporting;

Fig. 17 is an enlarged view showing a state in which a test piece supported by the support device illustrated in Fig. 14 is measured by a dial gauge; and

Fig. 18 is a flowchart representing a centering adjustment method of a workpiece using the tool grinder illustrated in Fig. 2.

BEST MODE FOR CARRYING OUT THE INVENTION

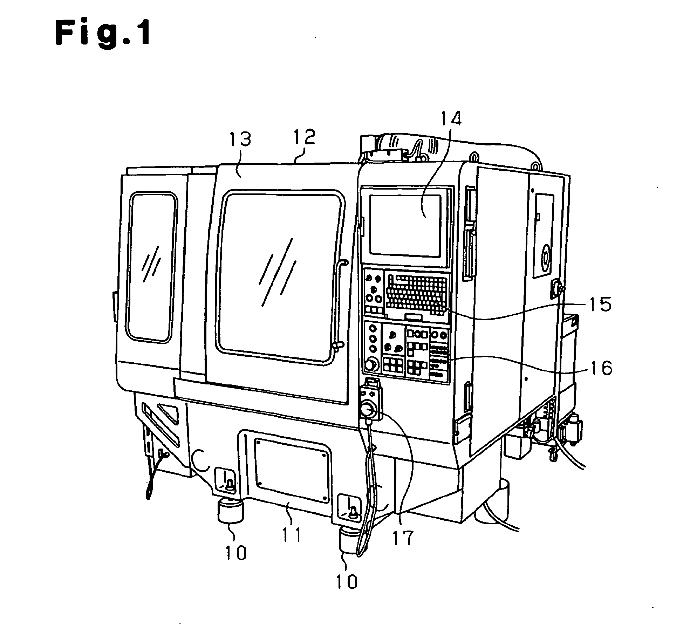

Figs. 1 to 18 illustrate a tool grinder 20 according to one embodiment of the present invention.
The tool grinder 20 of the present patent application is a fully automatic CNC (Computer Numeric Control) minute diameter end mill grinder. The tool grinder 20 fully automatically operates during all steps of a minute diameter end mill (with the tool diameter of 0.01 mm to 2.0 mm) by a single time of chucking.

<General Configuration>

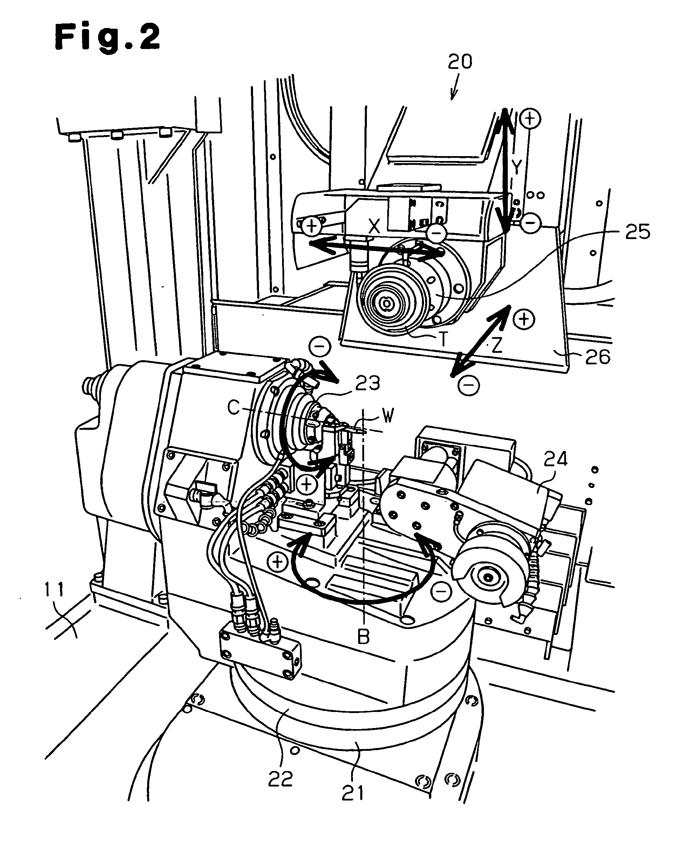

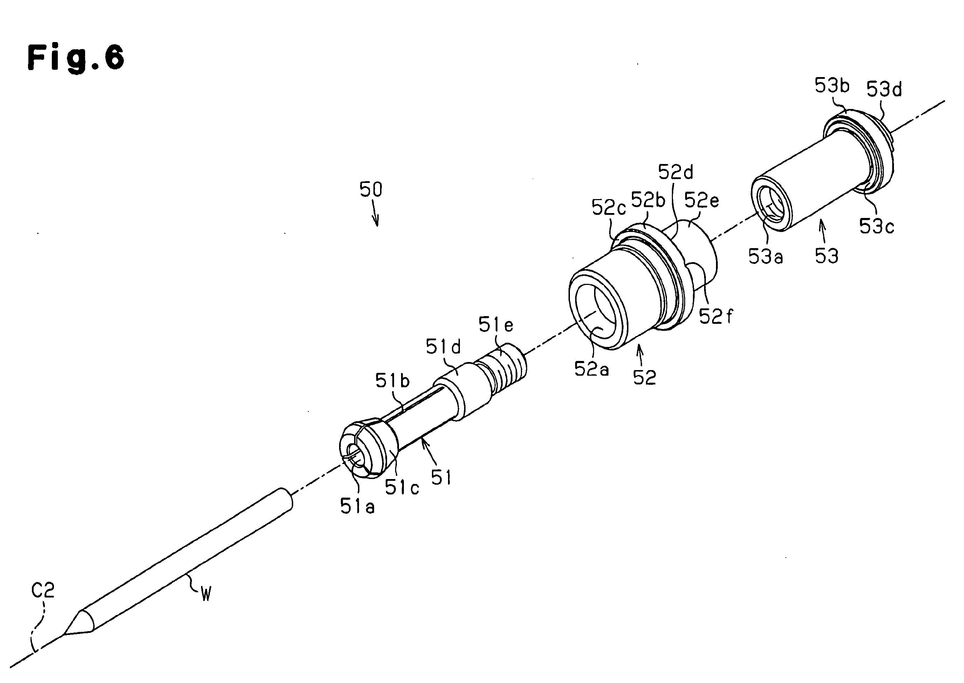

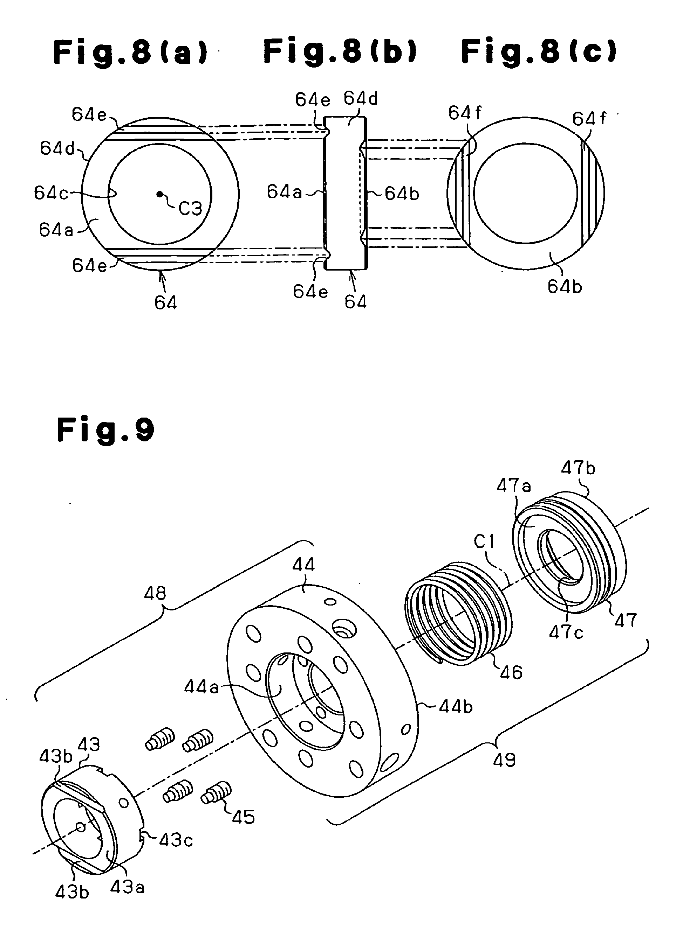

As shown in Fig. 1, the tool grinder 20 is received in a device cover 12 having outer surfaces forming a box shape, which is provided on a frame 11 supported by a plurality of bases 10. A front door 13, which has a window portion and is selectively opened and closed, is arranged at the center of the front surface of the device cover 12. The front door 13 isolates the tool grinder 20, which is arranged in the device cover 12. In a right section the front door 13, the device cover 12 has a liquid crystal display 14, a keyboard 15, and an NC controller console panel 16, in this order from top to bottom. An NC controller is provided in the device cover 12. A manual pulsar 17 is connected to the NC controller through a cable. As a dial of the manual pulsar 17 is manipulated by the operator, an NC control servomechanism is slightly moved. When the front door 13 is opened, the tool grinder 20 is exposed as illustrated in Fig. 2.
In the tool grinder 20, the axis (the rotational axis) of a rotary base 21 provided on the frame 11, which extends in a vertical direction, is formed as B axis. The tool grinder 20 has a rotary table 22, which is rotatable about the B axis. A work head 23 and a dressing device 24 are provided on the rotary table 22. The rotary table 22, the work head 23, and the dressing device 24 are rotatable about the B axis.
The work head 23 holds a workpiece W. The workpiece W is arranged in a manner extending perpendicular to the B axis and in a horizontal direction. The workpiece W is, for example, a minute diameter end mill. The rotational axis (the axis) of the work head 23 will be referred to as C axis. In the illustrated embodiment, the C axis is referred to in distinguishing manners such as spindle axis C1, or the rotational axis (the axis) of a workpiece spindle 40, and workpiece axis C2, which is the rotational axis (the axis) of the workpiece W. For example, Fig. 9 illustrates the spindle axis C1 and Fig. 6 illustrates the workpiece axis C2 and the workpiece W. In the illustrated embodiment, the workpiece W has a round bar-like shape and has a conical distal end. In other words, the workpiece W has a radial outer portion, or an elongated pillar, and a distal end, which is a cone.
A tool spindle 25 is arranged above the work head 23.

<Coordinate System>

Fig. 2 illustrates the coordinate system of the illustrated embodiment.
A tool T extends in a horizontal direction and a forward-rearward direction while mounted in the tool spindle 25. The direction defined by the axis (the rotational axis) of the tool T is referred to as Z axis. The horizontal (leftward-rightward) direction perpendicular to the Z axis is referred to as X axis. The vertical direction is referred to as Y axis.
The X axis extends in a leftward-rightward feeding direction. As viewed in Fig. 2, a leftward direction is referred to as + direction and the position at which the X axis perpendicularly crosses the B axis is referred to as the origin of the X axis.

The Y axis extends in an upward-downward feeding direction of the tool spindle 25. The upward direction is referred to as + direction and the position maximally spaced from the C axis in the upward direction in the movable range of the tool spindle 25 is referred to as the origin of the Y axis.

The Z axis extends in a forward-rearward feeding direction of the tool spindle 25. The rearward direction (the direction separating from the B axis) is referred to as + direction and the position maximally spaced from the B axis in the rearward direction in the movable range of the tool spindle 25 is referred to as the origin of the Z axis.

As of the rotational directions of the B axis, as viewed from above, the clockwise direction is referred to as + direction and the origin of rotation of the B axis is the position at which the C axis and the Z axis extend parallel with each other.

In the rotational directions of the C axis, as viewed from the + direction to the - direction of the X axis (from the left to the right in Fig. 2), the clockwise direction is referred to as + direction and the initial position is the origin (0°) of rotation of the C axis.

The NC controller translates the tool spindle 25 in the directions of the X axis, the Y axis, and the Z axis. The work head 23 rotates about the distal end of the workpiece W and around the B axis. The workpiece spindle 40 and the workpiece W rotate about the C axis. In other words, the NC control of the NC controller includes five control axes, which are the X axis, the Y axis, the Z axis, the B axis, and the C axis.

«Work Head 23»

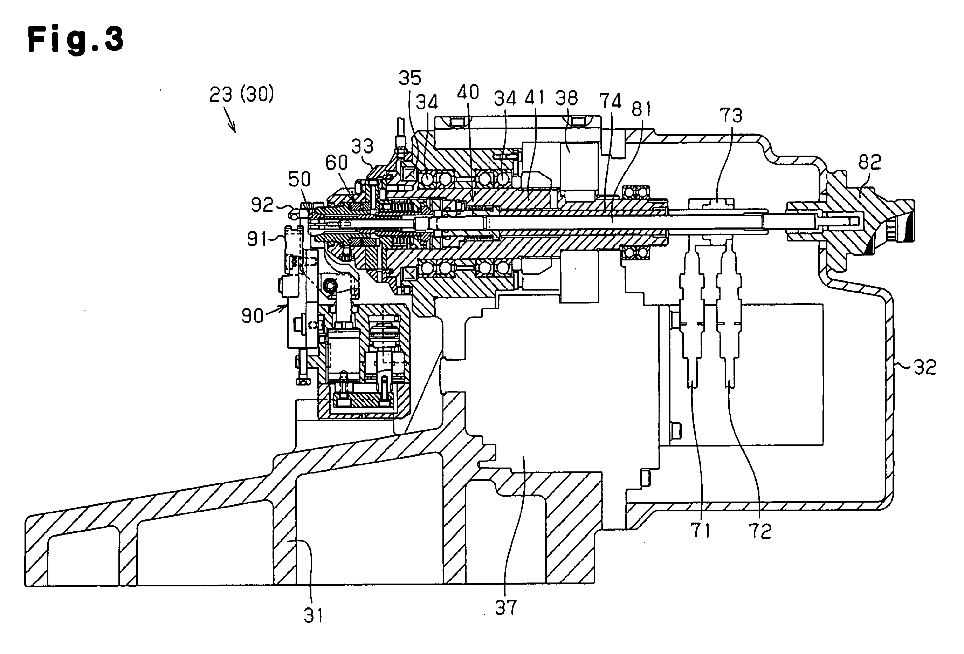

Figs. 3 to 12 illustrate the work head 23. In the description of the work head 23 of the illustrated embodiment, the portion of the work head 23 to which the workpiece W is secured is referred to as a distal end or a front portion of the work head 23. The portion opposite to this portion is referred to as a proximal end or a rear portion of the work head 23.

(Work Head Body 30)

As shown in Fig. 3, the work head 23 includes a work head body 30 that receives the mechanisms, or the like, of the work head 23. The work head body 30 is fixed to the rotary table 22, which is shown in Fig. 2. The work head body 30 rotatably supports the workpiece spindle 40 and forms the appearance of the work head 23. Specifically, the work head body 30 includes a base frame 31, a cover 32, and a labyrinth 33. The base frame 31 is fixed to the rotary table 22 and supports the work head 23 as a whole. The cover 32 is provided above the base frame 31 and covers the work head body 30 as a whole. The labyrinth 33 seals the spindle 41, which rotates, in a rotatable manner and air-tightly with respect to the cover 32.

The cover 32 has a space in which the workpiece spindle 40 is received. In the space, a plurality of bearings 34 each formed by a radial ball bearing are provided in order to rotatably support the spindle 41. An oil seal 35 is provided at a distal end of the cover 32 and maintains lubricant oil of the spindle 41, which rotates, and prevents entry of foreign matter.

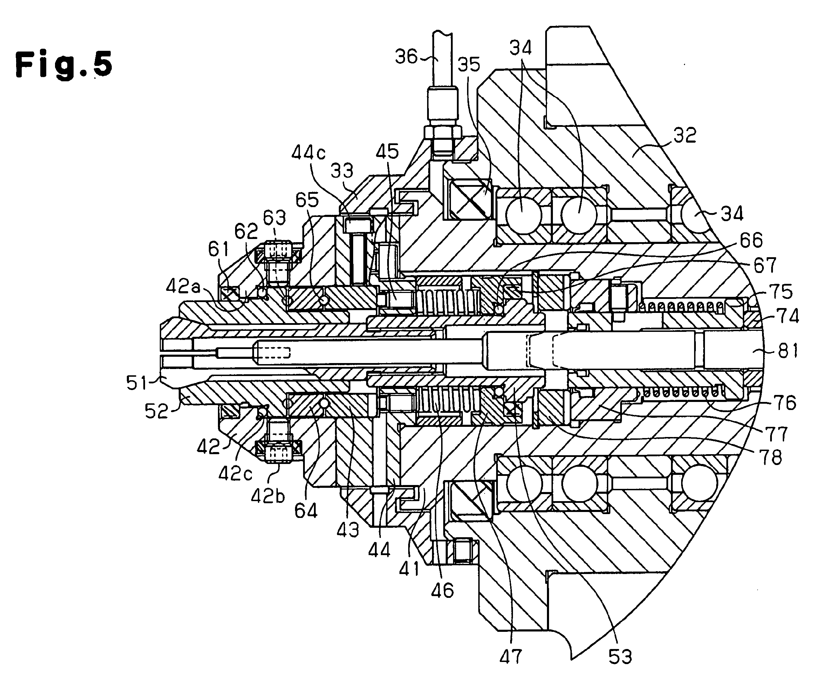

With reference to Fig. 5, the labyrinth 33 is provided at the distal end of the cover 32 and covers the distal end of the spindle 41, which is accommodated in the cover 32. The labyrinth structure of the labyrinth 33 maintains lubricant oil of the spindle 41, which rotates, and prevents entry of foreign matter. Particularly, the labyrinth 33 has an air inlet 36 and thus maintains positive pressure in the labyrinth 33 and improves the effect of the labyrinth structure.

(Workpiece spindle 40)

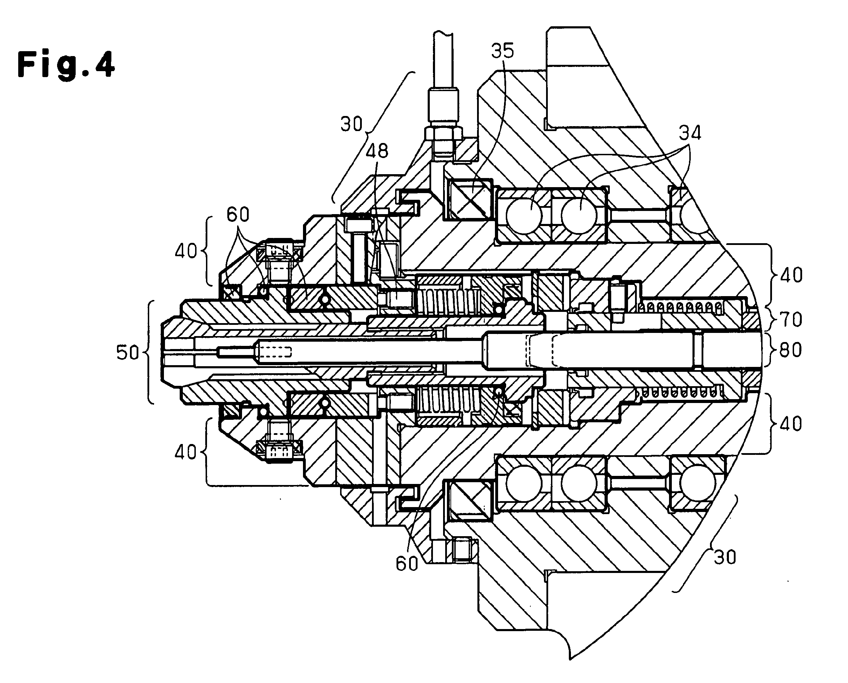

As illustrated in Figs. 3 and 4, a workpiece spindle 40 is arranged in the work head body 30. The workpiece spindle 40 refers to the spindle 41 and the portions that rotate integrally with the spindle 41. With reference to Fig. 5, specifically, the workpiece spindle 40 includes, in addition to the spindle 41, a collet case 42 secured to the distal end of the spindle 41, a guide 43, a chuck base 44, a preload adjustment screw 45, a holding spring 46, and a retainer 47.

As illustrated in Fig. 3, rotation of a drive unit 37, which has a drive motor controlled through the NC controller console panel 16 (Fig. 1), is transmitted to the spindle 41 by a rotation transmitting mechanism 38 so that the workpiece spindle 40 rotates. In the illustrated embodiment, the rotational speed of the spindle 41 is approximately 60 rpm.

(Workpiece Holding Mechanism 50)

A workpiece holding mechanism 50, which is illustrated in Fig. 4, is formed by a collet chuck mechanism. With reference to Fig. 5, specifically, the workpiece holding mechanism 50 has a collet 51, a collet holder 52, and a base holder 53. The collet 51 holds the workpiece W. In other words, when the workpiece holding mechanism 50 holds the workpiece W, the workpiece W has a projecting portion projecting from the workpiece holding mechanism 50. The projecting portion of the workpiece W has a side surface (a circumferential surface) that encompasses the workpiece axis C2. The base holder 53 is threaded onto the proximal end of the collet 51.

As illustrated in Fig. 6, the collet 51 has a cylindrical shape as a whole. The distal end of the collet 51 has an insertion hole 51a through which the workpiece W is inserted. A collet tapered portion 51c, which has an outer diameter that becomes greater toward the distal end, is formed at the distal end of the collet 51. A slit portion 51 b, which is divided into three portion at equal angles, is provided from the distal end of the collet 51 to the substantial center of the collet 51 in the direction of the workpiece axis C2 (the longitudinal direction). A guide portion 51d having an outer diameter slightly greater than those of the other portions is formed at the position closer to the proximal end of the collet 51 at the center of the collet 51. A collet threading portion 51 e in which an external thread is formed is provided at the proximal end of the collet 51.

The collet holder 52 as a whole is a tubular member having such an inner diameter that the collet 51 can be inserted in the collet holder 52. A holder tapered portion 52a having a tapered shape with an inner diameter becoming greater toward the distal end is formed in the inner wall of the collet holder 52 at a position closer to the distal end of the collet holder 52 (a position closer to the workpiece W). The holder tapered portion 52a is capable of tightly contacting the collet tapered portion 51 c. The holder tapered portion 52a tightens the slit portion 51b of the collet 51. In other words, as the collet 51 is inserted into the collet holder 52 and the collet 51 is independently urged toward the proximal end, the collet tapered portion 51 c is tightened and the space surrounded by the slit portion 51 b becomes smaller. This reduces the inner diameter of the collet 51, thus allowing the collet 51 to fixedly hold the workpiece W, which is passed through the insertion hole 51a.

A holder flange 52b is formed substantially at the axial center of the collet holder 52. The surface of the holder flange 52b facing the distal end of the collet holder 52 is an annular flat surface, or a front preloaded ball receiving surface 52c serving as a first holding surface. The surface of the holder flange 52b facing the proximal end is a front cross ball receiving surface 52d. A proximal end 52e of the collet holder 52 is inserted into a cross guide 64 and a guide 43, as illustrated in Fig. 5. However, the proximal end 52e does not contact the cross guide 64 or the guide 43.

The base holder 53 as a whole is formed in a cylindrical shape. An internal thread is formed in the inner surface of the distal end (the end closer to the workpiece W) of the base holder 53, thus forming a holder threading portion 53a. The holder threading portion 53a can be threaded onto the collet threading portion 51e. A base flange 53b is formed at the outer circumference of the proximal end of the base holder 53. The surface of the base flange 53b facing the distal end of the base holder 53 is an annular flat surface, which is a rear preloaded ball receiving surface 53c serving as a second holding surface. A three-stepped portion is formed at the proximal end of the base flange 53b as a collar fitting portion 53d. The proximal end of the base flange 53b corresponds to the minimum outer diameter of the collar fitting portion 53d. The portion with the minimum diameter of the proximal end of the base holder 53 is engageable with the inner surface of a collar 78 of a collet opening and closing portion 70 through tight contact.

With reference to Fig. 4, a workpiece holding mechanism 50 formed by the collet 51, the collet holder 52, and the base holder 53 is a floating portion supported by a floating assembly 60 in a floating manner with respect to the workpiece spindle 40.

(Collet Clamping Mechanism 49)

The collet clamping mechanism 49 is a collet fixing mechanism that maintains the collet 51 in a state in which the collet 51 holds the workpiece W by means of the holding spring 46 and the retainer 47. As shown in Fig. 9, the holding spring 46 is formed by a compression coil spring. The front end of the holding spring 46 (the end of the holding spring 46 closer to the workpiece W) is held in contact with a holding spring receiving surface 44b of the chuck base 44.

The retainer 47 has an annular shape as a whole. A holding spring receiving portion 47a is formed on the front surface of the retainer 47 (the end of the retainer 47 facing the workpiece W). The holding spring receiving portion 47a includes a recess that receives the rear end of the holding spring 46. The rear end of the holding spring 46 is held in contact with the holding spring receiving portion 47a of the retainer 47.

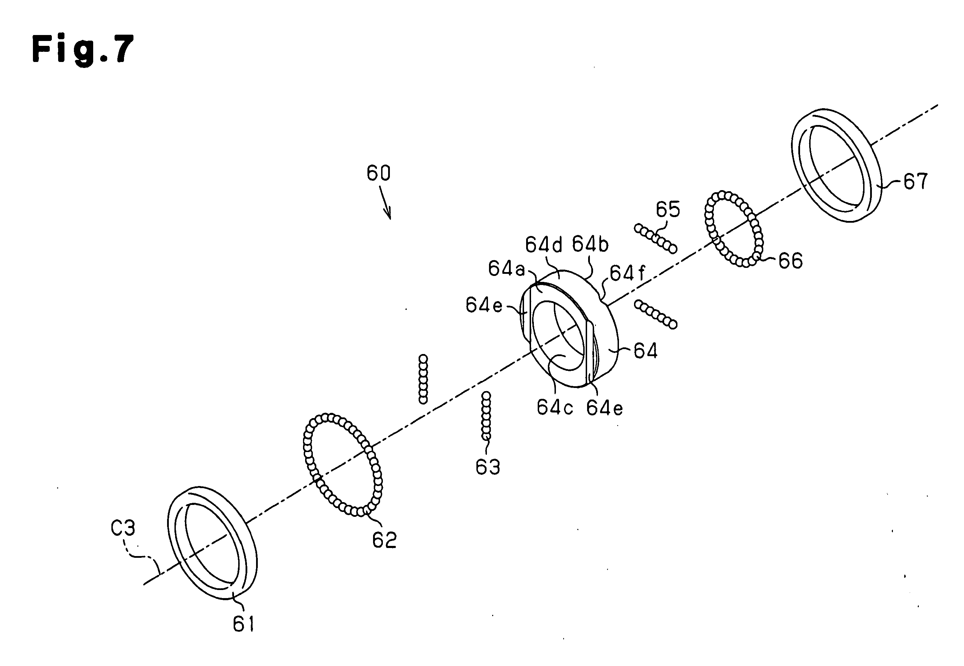

A rear preloaded ball receiving surface 47b serving as a second spindle surface is formed on the rear surface of the retainer 47. The rear preloaded ball receiving surface 47b is an annular flat surface that receives rear preloaded balls 66 each serving as a second preloaded ball. With reference to Fig. 5, a base holder 53 extends through a central hole of the retainer 47. The rear preloaded ball receiving surface 47b of the retainer 47 is arranged to face a rear preloaded ball receiving surface 53c of the base holder 53, which is illustrated in Fig. 6. A number of rear preloaded balls 66, which are arranged in an annular shape as illustrated in Fig. 7, are provided between and held by the rear preloaded ball receiving surface 47b and the rear preloaded ball receiving surface 53c. This causes the holding spring 46 in a compressed state to urge the base flange 53b rearward. The workpiece W, which is held by the collet 51, is thus maintained in the held state.

The rear preloaded ball receiving surface 53c of the base holder 53 and the rear preloaded ball receiving surface 47b of the retainer 47 are formed as parallel flat surfaces. The rear preloaded balls 66, which are arranged in the annular shape, are provided between the rear preloaded ball receiving surface 53c and the rear preloaded ball receiving surface 47b. As a result, while maintained in parallel states, the base holder 53 and the retainer 47 are movable relative to each other in any direction perpendicular to the spindle axis C1.

(Floating Assembly 60)

The floating assembly 60, which is illustrated in Fig. 4, is a mechanism that transmits rotation while supporting the workpiece holding mechanism 50 in a state movable relative to the workpiece spindle 40. Specifically, with reference to Fig. 5, the workpiece holding mechanism 50 includes a front oil seal 61, front preloaded balls 62, front cross balls 63, the cross guide 64, rear cross balls 65, the rear preloaded balls 66, and a rear oil seal 67.

(Oil Seals 61, 67)

The front oil seal 61 and the rear oil seal 67 are annular members each formed by an oil-resistant elastic body such as fluororubber, silicone rubber, acrylic rubber, or a nitrile rubber. The front oil seal 61 is arranged around the side surface of the collet holder 52 facing the distal end and provided between the collet holder 52 and the collet case 42. The rear oil seal 67 is arranged around the base flange 53b of the base holder 53 and provided between the base holder 53 and the retainer 47. The front oil seal 61 and the rear oil seal 67 maintain lubricant oil in rotatable portions and prevent entry of foreign matter. Particularly, the elastic force generated by the front oil seal 61 and the rear oil seal 67 applies centripetal force that acts to cause the axis of the workpiece holding mechanism 50 (the workpiece axis C2), which extends through the front and rear oil seals 61, 67, to coincide with the spindle axis C1 (the rotational axis of the workpiece spindle 40). As a result, simply by floating the workpiece holding mechanism 50 by means of the front preloaded balls 62, the front cross balls 63, the rear cross balls 65, and the rear preloaded balls 66, the workpiece axis C2 is caused to substantially coincide with the spindle axis C1 against gravity, even without any other supporting components. This reduces the movement range of the floating mechanism.

(Balls 62, 63, 65, 66)

The front preloaded balls 62, the front cross balls 63, the rear cross balls 65, and the rear preloaded balls 66 are formed by a plurality of hard balls with high dimension accuracy and high circularity, which are formed by stainless steel or iron steel and used in ball bearings. These balls (62, 63, 65, 66) elastically deform when preloaded and improve the dimension stability of the workpiece holding mechanism 50.

(Cross Guide 64)

The cross guide 64, which is illustrated in Figs. 7 and 8, is an annular member. The cross guide 64 has a front cross ball receiving surface 64a serving as a first cross surface facing the workpiece W and a rear cross ball receiving surface 64b serving as a second cross surface facing opposite to the workpiece W. The front cross ball receiving surface 64a and the rear cross ball receiving surface 64b are substantially flat surfaces. The cross guide 64 also includes an inner circumferential surface 64c and an outer circumferential surface 64d, or a side surface.

Two front cross V grooves 64e, or first cross grooves, which linearly extend parallel with each other, are formed in the front cross ball receiving surface 64a. On a plane perpendicular to the floating axis C3, which is the axis of the cross guide, the front cross V grooves 64e are located at symmetrical positions with the floating axis C3 provided between the front cross V grooves 64e.

Two linear holding V grooves 52f, or holding grooves, which extend parallel which each other, are formed in the front cross ball receiving surface 52d of the collet holder 52, which is illustrated in Fig. 6. The holding V grooves 52f are located at symmetrical positions on a plane perpendicular to the workpiece axis C2, with the workpiece axis C2 arranged between the holding V grooves 52f. The holding V grooves 52f face the corresponding front cross V grooves 64e. The corresponding ones of the front cross balls 63, or the first cross balls, which are linearly aligned, are arranged between each one of the front cross V grooves 64e and the opposed one of the holding V grooves 52f. As the front cross balls 63 roll, the collet holder 52 and the cross guide 64 move relative to each other along the front cross V grooves 64e and the holding V grooves 52f. In this state, the front cross V grooves 64e and the holding V grooves 52f are maintained parallel states. In other words, regardless of mutually relative movement of the collet holder 52 and the cross guide 64, the workpiece axis C2 and the floating axis C3 are movable relative to each other while maintained mutually parallel.

Two rear cross V grooves 64f, or second cross grooves, which linearly extend parallel with each other, are formed in the rear cross ball receiving surface 64b. The rear cross V grooves 64f are located at symmetric positions on a plane perpendicular to the floating axis C3, with the floating axis C3 arranged between the rear cross V grooves 64f. Each one of the rear cross V grooves 64f extends perpendicular to the corresponding one of the front cross V grooves 64e as viewed along the floating axis C3. In other words, as viewed along the floating axis C3, each one of the rear cross V grooves 64f extends perpendicular to the corresponding one of the holding V grooves 52f.

Two spindle V grooves 43b, or spindle grooves, which linearly extend parallel with each other, are formed in the rear cross ball receiving surface 43a of the guide 43, which is illustrated in Fig. 9. The spindle V grooves 43b are located at symmetric position on a plane perpendicular to the spindle axis C1, with the spindle axis C1 arranged between the spindle V grooves 43b. Each one of the spindle V grooves 43b faces the corresponding one of the rear cross V grooves 64f. The corresponding ones of the rear cross balls 65, or the second cross balls, which are linearly arranged, are provided between each one of the spindle V grooves 43b and the corresponding one of the rear cross V grooves 64f. As the rear cross balls 65 roll, the cross guide 64 and the guide 43 move relative to each other along the spindle V grooves 43b and the rear cross V grooves 64f. The spindle V grooves 43b and the rear cross V grooves 64f are maintained parallel with each other. In other words, regardless of mutually relative movement of the cross guide 64 and the guide 43, the spindle axis C1 and the floating axis C3 are movable relative to each other while maintained in mutually parallel states.

The spindle V grooves 43b, the holding V grooves 52f, the front cross V grooves 64e, and the rear cross V grooves 64f each have a V-shaped cross section that extends perpendicular to the extending direction of each groove. Thus, if the opposed pair of the V grooves are urged toward each other, the front cross balls 63 and the rear cross balls 65, which are arranged between the corresponding V grooves, are received in the V grooves and contact the walls of the grooves, basically, each at two points. If the interval between the corresponding pair of the grooves is inaccurate or altered by change of the temperature, the front cross balls 63 and the rear cross balls 65 contact one of the grooves at two points and the other at one point. Even in this case, the positions of the front cross balls 63 and the positions of the rear cross balls 65 are determined only by the spindle V grooves 43b, the holding V grooves 52f, the front cross V grooves 64e, and the rear cross V grooves 64f. Thus prevents destabilization of the front cross balls 63 and the rear cross balls 65.

Accordingly, as the guide 43 rotates, the rotational force produced by the guide 43 is uniformly transmitted to the cross guide 64. Rotation of the cross guide 64 is then uniformly transmitted to the collet holder 52.

The floating mechanism maintains the spindle axis C1, the workpiece axis C2, and the floating axis C3 in mutually parallel states. That is, the guide 43, the collet holder 52, and the workpiece holding mechanism 50 are maintained in mutually parallel states. In this manner, while permitting mutually relative displacement of the spindle axis C1, the workpiece axis C2, and the floating axis C3, the floating mechanism reliably transmits the rotational force of the workpiece spindle 40 to the workpiece W, which is held by the workpiece holding mechanism 50.

(Preload Mechanism 48)

The preload mechanism 48, which is illustrated in Fig. 4, is formed as a portion of the workpiece spindle 40. Specifically, the preload mechanism 48 includes the guide 43, the preload adjustment screw 45, and the chuck base 44. The preload mechanism 48 preloads the front preloaded balls 62, the front cross balls 63, the rear cross balls 65, and the rear preloaded balls 66, which configure the floating assembly 60, to such an extent that the balls 62, 63, 65, 66 slightly deform in elastic manners. This prevents the floating mechanism from chattering.

As illustrated in Fig. 9, the chuck base 44 is fixed to the distal end of the spindle 41 with bolts and rotates integrally with the spindle 41. The chuck base 44 is shaped like a flattened cylinder as a whole and has a circular recess 44a, which is provided at the center of the chuck base 44. The recess 44a receives the guide 43. Four preload adjustment screws 45 extend parallel with the spindle axis C1 and are spaced apart at equal angular intervals in such a manner as to encompass the spindle axis C1. The preload adjustment screws 45 are threaded into the chuck base 44 at positions inside the recess 44a. The distal end of each of the preload adjustment screws 45 projects from the chuck base 44 toward the workpiece W and contacts a preload adjustment screw receiving surface 43c of the guide 43. By adjusting the projection amount of each preload adjustment screw 45 from the chuck base 44, the position of the guide 43 relative to the position of the chuck base 44 in the direction along the spindle axis C1 is changed so that preload is adjusted. As the bolt 44c, which is illustrated in Fig. 5, fixes the guide 43 to the chuck base 44, the preload by the preload adjustment screws 45 is fixed.

(Collet Case 42)

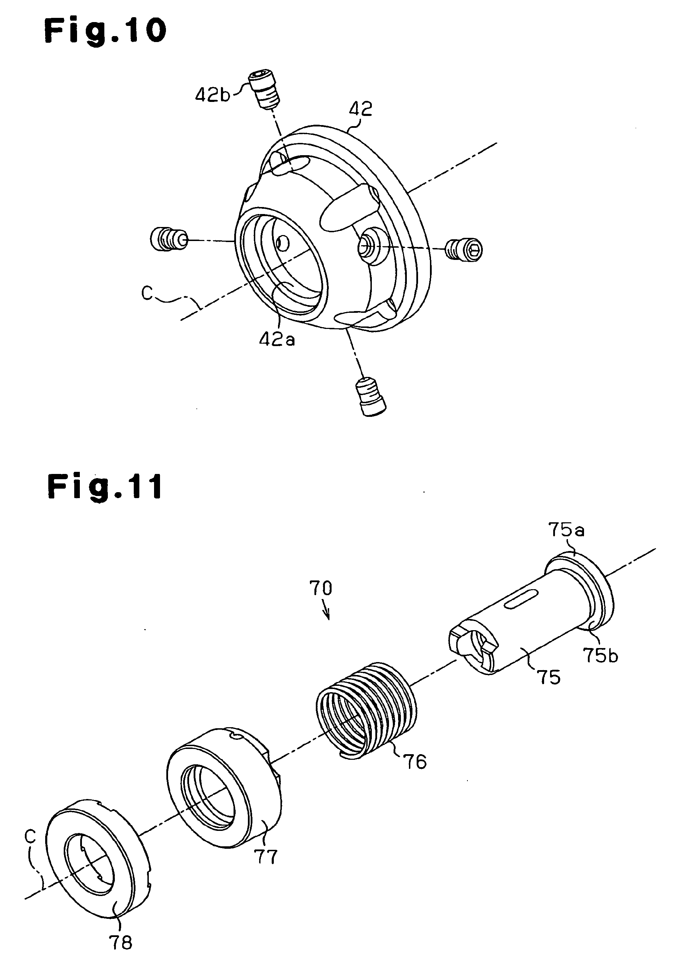

With reference to Fig. 5, the collet case 42 is fixed to the distal end of the chuck base 44. As illustrated in Fig. 10, the collet case 42 is a substantially cylindrical member as a whole with an outer diameter that becomes smaller toward the distal end. A hole through which the collet holder 52 is inserted is formed at the center of the collet case 42. A case flange 42a, which projects radially inward, is formed on the inner circumferential surface of the hole. The rear surface of the case flange 42a is a front preloaded ball receiving surface 42c, which is an annular flat surface and serves as a first spindle surface. As illustrated in Fig. 5, the front preloaded ball receiving surface 42c contacts the front preloaded ball receiving surface 52c of the holder flange 52b through the front preloaded balls 62, or the first preloaded balls. The front preloaded ball receiving surface 52c of the collet holder 52 and the front preloaded ball receiving surface 42c of the collet case 42 are arranged on mutually parallel planes. The front preloaded balls 62 serving as the first preloaded balls, which are arranged in the annular shape, are provided between the front preloaded ball receiving surface 52c and the front preloaded ball receiving surface 42c. As a result while maintaining mutually parallel state, the collet holder 52 and the collet case 42 are movable relative to each other in any direction perpendicular to the spindle axis C1.

As has been described, the guide 43 and the collet case 42 hold the holder flange 52b of the floating assembly 60 through the front preloaded balls 62, the front cross balls 63, the cross guide 64, and the front cross ball receiving surface 64a. The preload adjustment screws 45 adjust the urging force by which the holder flange 52b is urged and preload the holder flange 52b to such an extent that the dimension accuracy is stabilized. As a result, the axial position of the workpiece holding mechanism 50 is accurately determined with respect to the workpiece spindle 40.

(C-axis Adjustment Screw 42b)

A C-axis adjustment screw 42b is inserted from the side surface of the collet case 42 toward the spindle axis C1. As the C-axis adjustment screw 42b is tightened, the distal end of the C-axis adjustment screw 42b contacts the collet holder 52. Four C-axis adjustment screws 42b are spaced apart at equal angular intervals, or 90 degrees. Accordingly, by adjusting the C-axis adjustment screws 42b, the position of the collet holder 52 relative to the collet case 42 is adjusted, and the collet holder 52 is fixedly tightened to the collet case 42. Specifically, as each of the C-axis adjustment screws 42b proceeds from the workpiece spindle 40 toward the workpiece axis C2, the C-axis adjustment screws 42b contact the workpiece holding mechanism 50. The proceeding amount of each C-axis adjustment screw 42b from the workpiece spindle 40 to the workpiece axis C2 is adjusted by rotating the C-axis adjustment screw 42b. As a result, each C-axis adjustment screw 42b is switchable between a state in which change of the position of the workpiece holding mechanism 50 relative to the workpiece spindle 40 is permitted and the state in which such change is restricted.

Even if the C-axis adjustment screws 42b are adjusted, the inclination of the workpiece holding mechanism 50 with respect to the workpiece spindle 40 is prevented from changing. That is, basically, the workpiece axis C2 and the spindle axis C1 maintain mutually parallel states. The C-axis adjustment screws 42b each function as a workpiece axis fixing portion that fixes the position of the workpiece axis C2 at a desired position with respect to the workpiece spindle 40 by temporarily restricting (locking) the floating mechanism.

(Floating Mechanism (60))

In the illustrated embodiment, the floating mechanism is a mechanism that supports the workpiece holding mechanism 50 in a manner movable relative to the workpiece spindle 40. The floating mechanism includes the floating assembly 60 illustrated in Fig. 5, the preload mechanism 48, and the collet holder 52 and the base holder 53 of the workpiece holding mechanism 50. The preload mechanism 48 preloads the floating assembly 60.

With reference to Fig. 5, the guide 43 contacts the holder flange 52b of the collet holder 52 through the rear cross balls 65, the cross guide 64, and the front cross balls 63. The holder flange 52b contacts the collet case 42 through the front preloaded balls 62.

Specifically, the guide 43 of the workpiece spindle 40 and the collet case 42 hold the holder flange 52b of the workpiece holding mechanism 50. As a result, the workpiece holding mechanism 50 is permitted to be moved in a direction perpendicular to the spindle axis C1, but not in a direction in which the spindle axis C1 extends.

(Collet Opening and Closing Portion 70)

The collet opening and closing portion 70, which is illustrated in Figs. 3 and 4, is a mechanism that switches the collet 51 between an open state and a closed state. The workpiece W is removable from the collet 51 when the collet 51 is open. When the collet 51 is tightened and closed, the collet 51 chucks the workpiece W. Specifically, as illustrated in Fig. 3, a collet fixing valve 71 and a collet releasing valve 72 of the collet opening and closing portion 70 adjust operation of hydraulic fluid and moves a collet mounting and demounting piston 73. This moves a collet opening and closing member 74, which is an elongated tubular member extending along the spindle axis C1, in the direction of the spindle axis C1.

The collet opening and closing portion 70 includes a tubular slider 75, which is illustrated in Fig. 11. The slider 75 includes a flange 75a and the front surface of the flange 75a is a return spring receiving surface 75b. As the collet opening and closing member 74 moves toward the workpiece W, the collet opening and closing member 74 urges the slider 75 toward the workpiece W. This causes the return spring receiving surface 75b to compress a return spring 76, thus causing the slider 75 to slide in a hole of an annular sleeve 77. The distal end of the slider 75 facing the workpiece W presses an annular collar 78.

As illustrated in Fig. 5, the collar 78 is arranged around a collar fitting portion 53d formed at the proximal end of the base holder 53. The collar 78 presses the base flange 53b of the base holder 53 toward the workpiece W. This causes the base flange 53b to press the retainer 47 through the rear preloaded balls 66 in a forward direction, thus pressing the collet 51 forward while compressing the holding spring 46. As a result, the collet tapered portion 51 c separates from the holder tapered portion 52a so that the slit portion 51 b is spreads. This opens the insertion hole 51 a, thus releasing the workpiece W.

In contrast, when the collet mounting and demounting piston 73 moves rearward, operation opposite to the above-described operation is brought about As a result, the collet 51 holds the workpiece W through the elastic force of the holding spring 46.

(Projection Adjustment Portion 80)

The projection adjustment portion 80 is a mechanism that adjusts the position of the workpiece W in the direction of the workpiece axis C2. Specifically, the projection adjustment portion 80 includes a projection adjustment bar 81 and a projection adjustment screw 82, which are illustrated in Fig. 3. The projection adjustment bar 81 is arranged in a space in the vicinity of the spindle axis C1. The projection adjustment bar 81 is arranged basically in such a manner that the projection adjustment bar 81 does not interfere with the workpiece spindle 40 when the workpiece spindle 40 rotates. The projection adjustment screw 82 moves the projection adjustment bar 81 in the direction of the spindle axis C1. In this manner, the holding length and the projection amount of the workpiece W, which may differ from one workpiece to another, are adjusted.

(Assembling Drawing of Work Head 23)

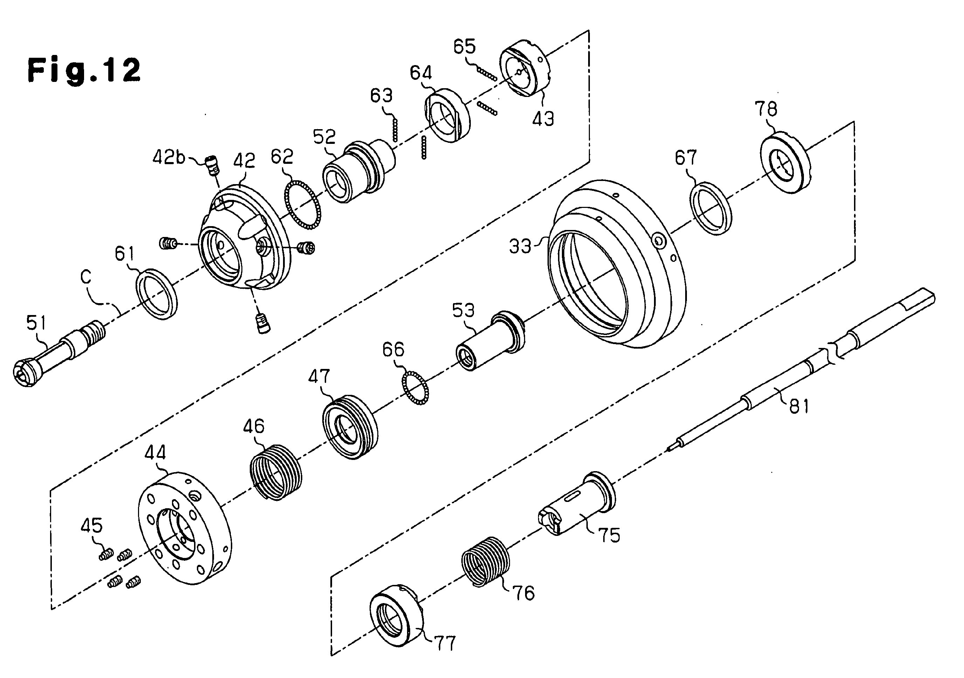

Fig. 12 illustrates the configuration of the work head 23 as a whole.

«Support Device 90»

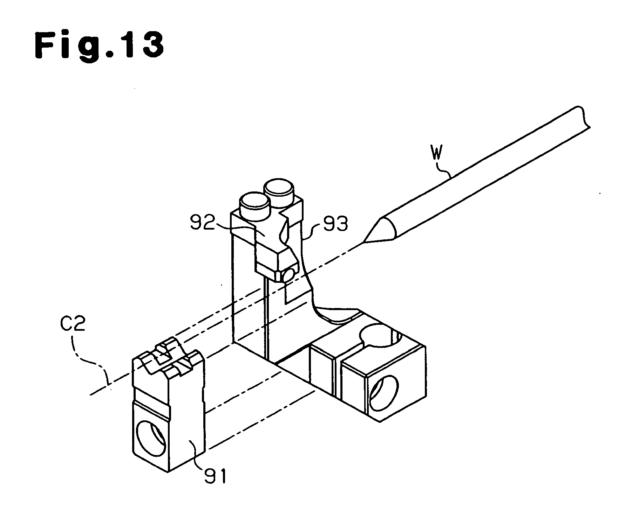

Figs. 13 to 15 illustrate a support device 90. The support device 90 rotatably supports the workpiece W mounted in the workpiece holding mechanism 50. Specifically, the support device 90 rotatably supports the side surface of the projecting portion of the workpiece W. As illustrated in Fig. 13, the support device 90 includes a support block 91 and a workpiece stopper 92. The support block 91 is a support member that rotatably supports the workpiece W. Specifically, the support block 91 supports (guides) the side surface of the workpiece W from below when the workpiece W is held by the workpiece holding mechanism 50. The workpiece stopper 92 presses the workpiece W against the support block 91 while allowing the workpiece W to rotate. As a result, the workpiece stopper 92 maintains the support block 91 in a state in which the support block 91 determines the position of the workpiece axis C2.

The support block 91 is a V block having a V groove formed in the upper end of the V block. The support block 91 has a cutout, or a "clearance", which is formed at the center in the direction of the workpiece axis C2. The cutout, for example, prevents the center of the V block from hitting the workpiece W independently from other portions of the V block. In other words, the cutout prevents the workpiece W from being loose. The relationship between the position of the support block 91 and the position of the workpiece W is determined solely by the V shape of the support block 91. The workpiece stopper 92 prevents the workpiece W from separating from the support block 91 by pressing the workpiece W against the support block 91 from a position vertically upward.

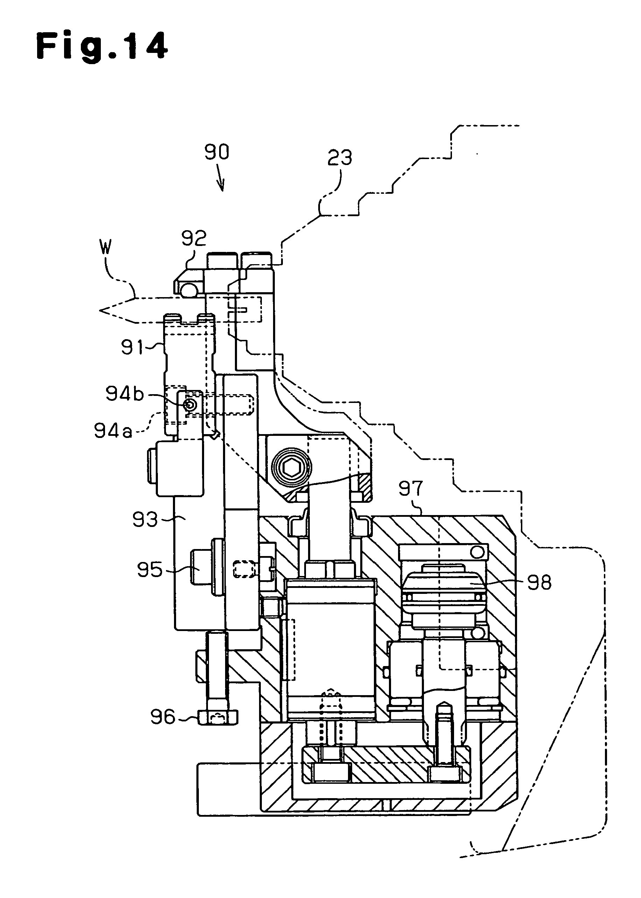

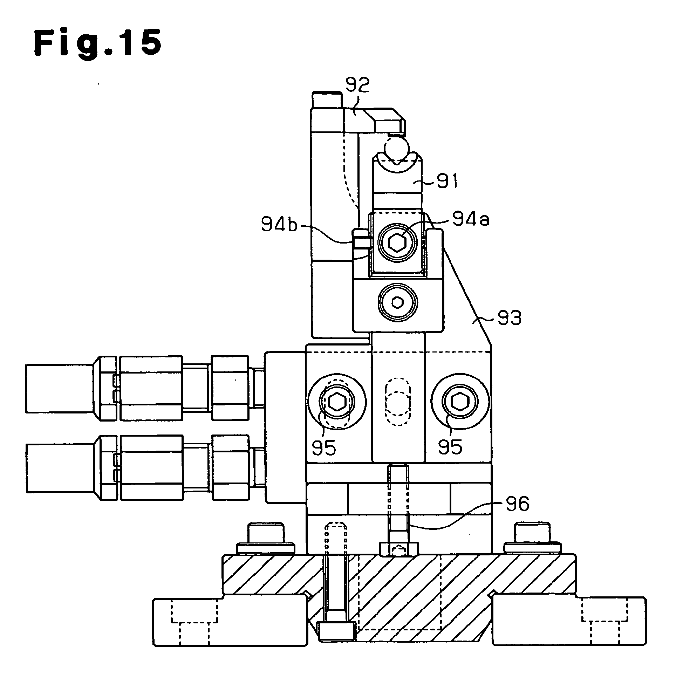

With reference to Figs. 14 and 15, the support block 91 is tightened to a support holder 93 by means of a support block fixing screw 94a. A support block fine adjustment screw 94b finely adjusts the position of the support block 91 in a direction that is perpendicular to the C axis and horizontal. The workpiece stopper 92 and the support holder 93 are movable relative to each other.

When a support holder fixing screw 95 is loose, an upward-downward adjustment screw 96 adjusts the support holder 93 relative to a support device body 97 in the upward-downward direction. This adjusts the position of the support block 91 in the upward-downward direction. The support holder 93, the support block fine adjustment screw 94b, the support holder fixing screw 95, and the upward-downward adjustment screw 96 configure a support position adjustment portion. The support position adjustment portion adjusts the position of the support block 91 in such a manner as to adjust the position at which the support block 91 supports the workpiece W.

The support device body 97 has a hydraulic circuit (not shown), which selectively raises and lowers the workpiece stopper 92, and a workpiece stopper moving device 98. The workpiece stopper moving device 98 includes a piston. As a result, the workpiece stopper moving device 98 presses and restricts the workpiece W by lowering the workpiece stopper 92 or releases the workpiece W by raising the workpiece stopper 92. The workpiece stopper 92 and the workpiece stopper moving device 98 configure a support locking portion.

(Workpiece W)

In the present embodiment, a bar having a shank diameter of 3 mm, 4 mm, or 6 mm, which is common in precision machining is used as the workpiece W. However, the present invention is not restricted to this. As precision machining is becoming more and more ultraprecise, the present invention may be effectively used in cases in which the shank diameter is less than 3 mm, which is, for example, 1 mm or 0.5 mm. In other words, the range of the shank diameter in which the illustrated embodiment is effectively used is, for example, 0.5 mm to 6 mm. However, the present invention is usable in the range of the shank diameter range less than 0.5 mm. If the diameter of the tool is greater than these ranges, pressure of machining such as grinding normally becomes great. The advantages of the present invention thus cannot be obtained sufficiently. Nonetheless, the invention is used for a case in which a round bar-like material with a great diameter, other than a tool, is subjected to precision machining.

Further, the workpiece W of the illustrated embodiment is assumed to be used in a case in which the diameter of the distal end of the tool formed by grinding the workpiece W is 0.01 mm. However, the workpiece W may be effectively used in cases in which such diameter is 0.005 mm or 0.001 mm. In other words, the range of the tool diameter in which the illustrated embodiment is effectively used may be 0.01 mm to 6.00 mm or values outside this range.

Although the workpiece W is an end mill by way of example, the workpiece W may be any other suitable tools such as a drill, a miller, or a reamer. Also, the workpiece W is not restricted to tools.

The machining tool of the present invention is not restricted to the tool grinder 20 but may be a cylinder grinder or any general machine tools other than the grinders.

«Adjustment Method»

(Precondition for Adjustment)

As a precondition for the adjustment method according to the present invention, it is desirable that adjustment accuracy of each portion be as high as possible. It is desirable at least that the inclination of the spindle axis C1 is small and that precession is sufficiently small compared to a target level of runout. It is also desirable that accuracy of the collet 51 is sufficiently small compared to the target level of runout. Further, it is required that the spindle axis C1 and the workpiece axis C2 be adjusted to become parallel with each other with sufficiently high accuracy.

Since the rotary table 22 and the work head 23 are separate bodies, the relationship between the position of the rotary table 22 and the position of the work head 23 is adjustable. Accordingly, the relationship between the position of the B axis and the position of the C axis is adjusted in such a manner that the B axis and the C axis cross each other precisely perpendicularly in an assembly step, by loosening a screw of the base frame 31, which is fixed to the rotary table 22.

It is also necessary that the spindle axis C1 is adjusted to extend along a single line with high accuracy as the rotary table 22 is rotated about the B axis in a reverse direction.

If the four C-axis adjustment screws 42b, which should have been loosened before adjustment, are still tightened, the C-axis adjustment screws 42b must be loosened.

(Outline of Adjustment)

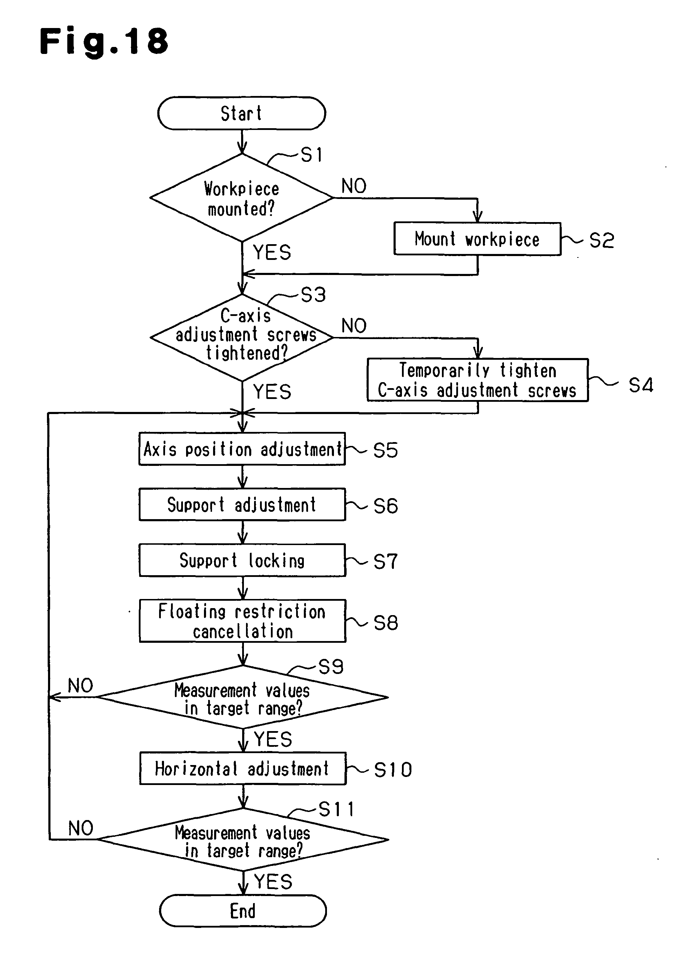

The flowchart of Fig. 18 represents the outline of the adjustment method of the illustrated embodiment.

The operator carries out the adjustment method of the tool grinder 20 as follows. First it is determined whether the workpiece W is already mounted as an initial setting (step S1). If the workpiece W is not yet mounted (NO in step S1), the workpiece W is mounted (step S2). It is then checked whether the four C-axis adjustment screws 42b are all tightened (step S3). If all of the C-axis adjustment screws 42b are not tightened yet (NO in step S3), the C-axis adjustment screws 42b are temporarily tightened (step S4).

It is then checked whether the workpiece stopper 92 is disengaged and that the support block 91 is spaced from the workpiece W. In other words, the operator checks whether the workpiece W is released from supporting by the support device 90.

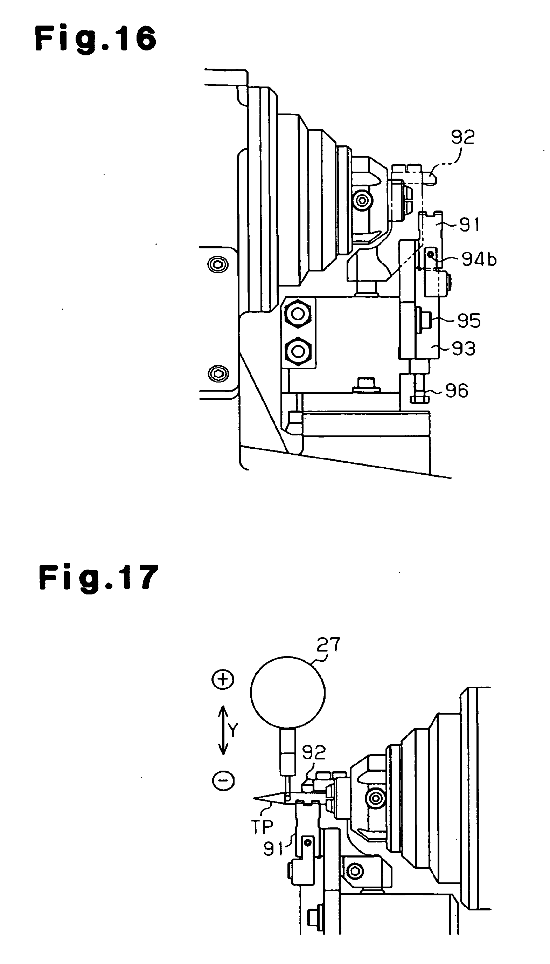

Subsequently, a measuring instrument such as a dial gauge 27, which is illustrated in Fig. 17, is set at the position where runout of the workpiece W is measurable. The dial gauge 27 is removably secured to a grinding head 26 through, for example, a magnet. This makes it easy for the operator to manipulate the dial gauge by using the NC control servo system.

Then, with the workpiece W held by the workpiece holding mechanism 50 but not supported by the support device 90, measurement is performed on the side surface of the projecting portion of the workpiece W, which is secured to the workpiece holding mechanism 50, while the workpiece spindle 40 is rotated. The C-axis adjustment screws 42b (the workpiece axis fixing portions) are then adjusted in such a manner that runout of the workpiece W is minimized and an axis position adjustment procedure (step S5) is carried out to fix the position of the axis of the workpiece W. The measurement points at which the position of the workpiece W is measured by the dial gauge 27 may be set to any suitable positions either in a vertical direction or a horizontal direction, as long as the measurement points are set on the side surface of the projecting portion of the workpiece W.

Subsequently, with the C-axis adjustment screws 42b fixing the position of the workpiece axis C2, which have been adjusted by the axis position adjustment procedure, a support adjustment procedure (step S6) is carried out to adjust the position of the support block 91 in such a manner that the support block 91 supports the workpiece W. The position of the support block 91 is adjusted in the vertical direction (the upward-downward direction) herein.

Following the support adjustment procedure, a support locking procedure (step S7) is performed to cause the workpiece stopper 92 to press the workpiece W. In other words, the goal of the support locking procedure is to maintain the position of the workpiece axis C2 at the position determined by the support block 91.

Finally, after the support locking procedure, a floating restriction cancelling procedure (step S8) is carried out by loosening the C-axis adjustment screws 42b to cancel the restriction on the floating mechanism.

Following the floating restriction cancelling procedure, the workpiece spindle 40 is rotated, and the runout of the workpiece W is measured (step S9). If the runout of the workpiece W is outside a target range (NO in step S9), adjustment is repeated by restarting from the axis position adjustment procedure (step S5).

If the runout of the workpiece W is in the target range (YES in step S9), the horizontal position of the support block 91 is adjusted (step S10). After such horizontal adjustment, it is determined whether the measurement value is in the target range (step S11). If the measurement value is in the target range (YES in step S11), the procedure is ended (YES in step S11).

If the measurement value is not in the target range, the adjustment is repeated again starting from the axis position adjustment procedure (step S5).

(Specific Example of Adjustment)

Hereinafter, the adjustment will be explained in detail. Centering adjustment of the workpiece W may be performed when the tool grinder 20 is to be shipped, when the size of the workpiece W to be ground is changed, or when the collet 51 or the support block 91 are replaced.

(Centering Adjustment of Workpiece W)

First, the operator moves the B axis to + 90.0000 (degrees) of the machine coordinate system by operating the manual pulsar 17 (see Fig. 1) through handle feed. That is, with reference to Fig. 2, as viewing the tool grinder 20 from front, the distal end of the work head 23 faces rightward. In adjustment, although a workpiece W that is actually to be machined may be used, a centering tool TP, which is a test piece that has been proved to satisfy a target accuracy in advance, is inserted into the collet 51 and brought into contact with the projection adjustment bar 81, which is located rearward, instead of the workpiece W. By pressing the chuck button of the NC controller console panel 16 (Fig. 1), the collet opening and closing member 74 retreats and the centering tool TP is chucked by the collet 51. At this stage, the support device 90 as a whole must maintain the current position without being lowered.

Next, the two holder fixing screws 95, which are illustrated in Fig. 15, are loosened. The upward-downward adjustment screw 96 is then rotated clockwise and thus loosened. This causes the support block 91 to descend due to the weight of the support block 91, shifting from the state illustrated in Fig. 17 to the state illustrated in Fig. 16.

(Axis Position Adjustment Procedure S5)

As illustrated in Fig. 17, the dial gauge 27 is removably secured to the grinding head (the tool spindle table) 26 through a magnet or the like. The dial gauge 27 is set to a state in which the dial gauge 27 measures the position of the side surface of the rotating centering tool TP and reads the maximum value and the minimum value of measurement values. The grinding head 26 is slightly moved by operating the manual pulsar 17 (Fig. 1) through handle feed so that the dial gauge 27 approaches the centering tool TP. The distal end of the dial gauge 27 is then applied to the portion immediately above the proximal end of the projecting portion of the centering tool TP from the workpiece holding mechanism 50. While rotating the spindle 41 (the C axis) by operating the manual pulsar 17 (Fig. 1) through jog feed, runout of the indicator needle of the dial gauge 27 is read. The position of the workpiece axis C2 is adjusted in such a manner that the runout of the indicator needle of the dial gauge becomes less than a target value (for example, 0.5 $\mu$m) by selectively loosening and tightening the respective one of the four C-axis adjustment screws. The C-axis adjustment screws 42b are then tightened firmly at predetermined positions and fixed. In other words, the maximum value and the minimum value of the measurement values of the dial gauge 27 are read while the workpiece spindle 40 is rotated once. The radial position of the workpiece W with respect to the workpiece spindle 40 is then adjusted in such a manner that the measurement value becomes the average of the maximum value and the minimum value. In this state, all of the four C-axis adjustment screws 42b must be slightly tightened. Specifically, if even one of the C-axis adjustment screws 42b is loose, adjustment becomes inaccurate.

In this manner, while rotating the workpiece spindle 40 without supporting the workpiece W by means of the support block 91, measurement is performed on the upper side surface of the projecting portion of the workpiece W (the centering tool TP herein), which is secured to the workpiece holding mechanism 50. The position of the axis (C2) of the centering tool TP is adjusted through the C-axis adjustment screws 42b, or the workpiece axis fixing portions, and fixed in such a manner that the runout of the workpiece W is minimized. Such procedure corresponds to the axis position adjustment procedure of the present application. Similar measurement is performed on the distal end of the radial outer portion of the centering tool TP. Specifically, the distal end of the dial gauge 27 is moved to the distal end of the radial outer portion of the centering tool TP by moving the X axis in one direction through handle feed.

(Support Adjustment Procedure S6)

By rotating the workpiece spindle 40 about the C axis through handle feed, the maximum value of the runout of the indicator needle of the dial gauge 27 is read and recorded. The C axis is stopped at the position at which the runout of the indicator needle of the dial gauge is maximized and the two support holder fixing screws 95 are both temporarily tightened. The upward-downward adjustment screw 96 is manually rotated counterclockwise until the runout of the indicator needle of the dial gauge 27 occurs only slightly. As the upward-downward adjustment screw 96 is rotated counterclockwise, the support block 91 rises and presses the centering tool TP upward. The support holder fixing screws 95 are then both tightened finally.

(Support Locking Procedure S7)

As a support button of the NC controller console panel 16 is manipulated to lower the workpiece stopper 92, the workpiece stopper 92 descends from the position illustrated in Fig. 16 to the position illustrated in Fig. 17. This causes the workpiece stopper 92 to press the centering tool TP against the support block 91. Specifically, after the support adjustment procedure, by pressing the centering tool TP by means of the workpiece stopper 92, the axis (C2) of the centering tool TP is maintained at the position determined by the support block 91. Such procedure corresponds to the support locking procedure of the present application.

The runout of the indicator needle of the dial gauge 27 is read with the workpiece stopper 92 lowered. It is then checked whether the runout of the indicator needle of the dial gauge 27 is a half of the aforementioned recorded value. If the runout is not the half yet, the support holder fixing screws 95 are re-loosened and adjustment is performed repeatedly.

(Floating Restriction Cancelling Procedure S8)

If the runout of the workpiece W becomes lower than the target value with the C-axis adjustment screws 42b tightened and the workpiece stopper 92 locking the support block 91, as has been described, a floating state is restored. In this case, the axis (C2) of the centering tool TP is stable since the support block 91 supports the workpiece W. Accordingly, by tightening all of the four C-axis adjustment screws 42b, the floating mechanism is allowed to function. In the illustrated embodiment, the adjustment range (the operating range) of the workpiece W by the floating mechanism is significantly small and movement of the floating mechanism is slight This results in substantially no stress acting on the support block 91. The procedure of loosening the C-axis adjustment screws 42b corresponds to the floating restriction cancelling procedure by which restriction on floating by the C-axis adjustment screws 42b is cancelled after the support locking procedure.

(Horizontal Position Adjustment S10)

As has been described, the centering adjustment of the present application is completed and then the horizontal position adjustment is performed. The horizontal position adjustment is carried out by horizontally moving the support block 91 through adjustment of the support block fine adjustment screw 94b. If, for example, the B axis and the C axis do not cross each other completely perpendicularly while located on a common plane, an error may occur when the rotary table 22 is rotated reversely by 180 degrees, even if the centering adjustment (S1 to S9) of the illustrated embodiment is perfectly performed. Since the embodiment includes the floating mechanism, displacement caused by other errors may be adjusted even after completion of centering. The goal of the horizontal position adjustment is to reduce the runout of the workpiece W (the centering tool TP) by minimizing the floating amount while correcting the displacement of the workpiece axis C2 with respect to the B axis.

First, the distal end of the dial gauge 27 is applied to the portion immediately beside the distal end of the radial outer portion of the centering tool TP. Then, while moving the Y axis through handle feed, the maximum value of the runout of the indicator needle of the dial gauge 27 is read and recorded. Specifically, by measuring the position of the side surface of the workpiece W in the horizontal direction with respect to the spindle axis C1, a measurement value before reverse rotation is obtained. By moving the Y axis in + direction through handle feed, the distal end of the dial gauge 27 is separated from the centering tool.

Subsequently, the B axis is moved to -90. 0000 of the machine coordinate system through handle feed. In other words, the workpiece spindle 40 is rotated reversely in such a manner that the spindle axis C1 rotates reversely by 180 degrees.

Next, the Y axis is moved in - direction through handle feed, the distal end of the dial gauge 27 is applied to the portion immediately beside the distal end of the radial outer portion of the centering tool TP. While moving the Y axis through handle feed, the maximum value of the runout of the indicator needle of the dial gauge 27 is read and recorded. In other words, by measuring the position of the side surface of the workpiece W after the reverse rotation by 180 degrees, a measurement after the reverse rotation is obtained.

It is then checked whether the difference between the measurement value before the reverse rotation and the measurement value after the reverse rotation falls in a target range. If the difference is outside the range, adjustment is carried out by the following procedures (i) to (iii).

(i) The support block fixing screw 94a is loosened.
(ii) By manipulating the support block fine adjustment screw 94b, the horizontal position of the support block 91 is adjusted. For example, if the measurement value before the reverse rotation is 1 $\mu$m and the measurement value after the reverse rotation is -8 $\mu$m, calculation is carried out as follows.

$$1 - (-8) = 9$$

$$9/2 = 4.5$$

$$-8 + 4.5 = -3.5$$

The position of the support block 91 is then adjusted in such a manner that the indicator needle of the dial gauge indicates -3.5 $\mu$m. That is, the support block 91 is moved horizontally in such a manner that the measurement value of the dial gauge 27 becomes equal to the average (-3.5 $\mu$m) of the measurement value before the reverse rotation and the measurement value after the reverse rotation.
(iii) The support block fixing screw 94a is tightened.

Afterwards, the Y axis is moved again in + direction through handle feed so that the distal end of the dial gauge 27 is separated from the centering tool TP. The B axis is moved to -90.0000 of the machine coordinate system through handle feed. The distal end of the dial gauge 27 is applied to the portion immediately beside the distal end of the radial outer portion of the centering tool TP. While rotating the C axis through handle feed, the runout of the indicator needle of the dial gauge 27 is read. It is then checked whether the runout of the indicator needle of the dial gauge 27 falls in the target range (step S11). If the runout of the indicator needle of the dial gauge 27 is outside the range (NO in step S11), centering adjustment of the centering tool TP is repeated from the start.

If the measurement at the distal end of the radial outer portion of the centering tool TP falls in the target range, the distal end of the dial gauge 27 is applied to the portion immediately beside the base of the centering tool TP. While rotating the C axis through handle feed, the runout of the indicator needle of the dial gauge 27 is read. It is then checked whether the runout of the indicator needle of the dial gauge falls in the target range. If the runout is outside the target range, the tool centering adjustment is repeated from the start.

(Repeated Measurement)

As has been described, by performing measurement at both the distal end and the proximal end of the centering tool TP, the adjustment is accomplished in such a manner that the runout of the centering tool TP is reduced. Also, by not only adjusting the vertical position of the support block 91 by means of the upward-downward adjustment screw 96, but also obtaining the measurement value after rotation of the rotary table 22 by 180 degrees, the horizontal position of the support block 91 is adjusted through the support block fine adjustment screw 94b. In other words, through measurement and adjustment at opposed positions of the B axis, which are the position before the reverse rotation by 180 degrees and the position after such reverse rotation, accuracy is further enhanced.

By repeatedly carrying out such adjustment, the accuracy is further improved.

The machine tool and the adjustment method of the machine tool according to the illustrated embodiment have the following advantages.

> (1) When performing ultraprecision machining on the round bar-like workpiece W by means of the machine tool, the workpiece W is rotated while suppressing runout of the workpiece axis C2.
> (2) First, in the axis position adjustment procedure, the C-axis adjustment screws 42b are tightened so as to restrict the function of the floating mechanism. In this state, the C-axis adjustment screws 42b are adjusted in such a manner that the workpiece axis C2 maximally coincides with the spindle axis C1. Then, in the support adjustment procedure, adjustment is performed in such a manner that the support block 91 is brought into contact with the workpiece W, which is located at the position corresponding to the coinciding axes. Subsequently, the workpiece W is stopped by the workpiece stopper 92 in the support locking procedure so that the position of the workpiece W is maintained. Afterwards, in the floating restriction cancelling procedure, floating restriction is cancelled by loosening the C-axis adjustment screws 42v so that floating function is restored.

As a result, the support block 91 is located in such a manner as to support the workpiece W maintained in the state in which the workpiece axis C2 coincides with the spindle axis C1. The floating mechanism is capable of absorbing slight displacement of the workpiece holding mechanism 50. That is, the floating mechanism only requires slight movement. This suppresses inertia, which causes runout of the workpiece W.

Particularly, the floating mechanism flexibly supports the workpiece W. As a result, even if displacement of the collet 51 or the spindle 41 occurs, such displacement is absorbed by the floating mechanism. The support block 91 is thus prevented from being influenced.

(3) The floating mechanism supports in a floating manner the workpiece W maintained in the state after the sufficient position adjustment has been accomplished in advance. The movement required for the floating mechanism thus becomes significantly small.

This reduces the movable range of the floating mechanism, thus significantly reducing the size of the floating mechanism.

Further, since a small-sized and light floating mechanism is employed, the mass of the floating mechanism becomes significantly small.

As a result, the floating mechanism becomes light and movement of the floating mechanism becomes significantly small. Accordingly, displacement of the center of gravity of the workpiece W or the floating mechanism does not occur, preventing imbalanced rotation of the workpiece W and generation of great inertia. Accordingly, in the illustrated embodiment, the floating chuck does not cause runout of the workpiece W.

The floating mechanism of the illustrated embodiment suppresses inclination of the workpiece holding mechanism 50 with respect to the workpiece spindle 40. In other words, the floating mechanism must permit movement of the workpiece holding mechanism 50 only in the direction perpendicular to the spindle axis C1. This simplifies the configuration of the floating mechanism.

Since hard balls made of stainless steel are employed, inclination is absorbed through deformation of the balls as long as the inclination is slight. This also simplifies the configuration of the floating mechanism.

(4) The dial gauge 27 is arranged on the grinding head 26, which can be finely moved without being influenced by movement of the workpiece spindle 40. Accordingly, using the NC control system of the machine tool, displacement of the workpiece W is measured. In this manner, the absolute position of the workpiece W is measured, the direction in which the displacement occurs is measured, and adjustment is carried out so as to correct the displacement. This adjusts the workpiece axis C2 in such a manner that the workpiece axis C2 coincides with the spindle axis C1. By repeating the procedure, the workpiece axis C2 is allowed to accurately coincide with the spindle axis C1.

(5) In the horizontal position adjustment of the support block 91, the workpiece spindle 40 arranged on the rotary table 22 is rotated about the B axis by 180 degrees and then measurement is performed. This reduces displacement of the B axis and the C axis, improving accuracy as a whole, and enhancing the accuracy of the tool to be completed.

(6) Measurement of the workpiece W is performed at both the distal end and the proximal end of the workpiece W. This improves the accuracy as a whole, and the accuracy of the tool to be provided is enhanced.

(7) Through the centering adjustment of the test piece (the centering tool TP) instead of the workpiece, which is the actual target of machining, the adjustment becomes more accurate.

(8) The four C-axis adjustment screws 42b are arranged in the workpiece spindle 40 in such a manner that the C-axis adjustment screws 42b are arranged circumferentially around the workpiece holding mechanism 50. The C-axis adjustment screws 42b extend toward the workpiece axis C2 and contact the workpiece holding mechanism 50. This arrangement allows the C-axis adjustment screws 42b to adjust the position of the workpiece holding mechanism 50 in any radial direction about the workpiece axis C2. Further, employing the C-axis adjustment screws 42b simplifies the mechanism of the workpiece axis fixing portion, decreases the mass of the workpiece axis fixing portion, and reduces the size of the workpiece axis fixing portion. The adjustment is also simplified.

(9) The floating mechanism employs the cross guide 64. This allows the floating mechanism to reliably transmit the rotational force of the workpiece spindle 40 to the workpiece holding mechanism 50, despite the compact configuration of the floating mechanism. This also allows the workpiece holding mechanism 50 to move relative to the workpiece spindle 40 without inclining in any direction perpendicular to the workpiece axis C2. Particularly, since the cross guide 64, which is a plate-like member, is formed as a disk, the weight of the cross guide 64 becomes effectively balanced.

(10) The cross guide 64 has the front cross V grooves 64e and the rear cross V grooves 64f. The workpiece spindle 40 includes the spindle V grooves 43b and the workpiece holding mechanism 50 has the holding V grooves 52f. In other words, these grooves (43b, 52f, 64e, 64f) each have a V-shaped cross section. This tightly positions the balls (62, 63, 65, 66) that roll in these grooves. The rotational force of the workpiece spindle 40 is thus uniformly transmitted to the workpiece holding mechanism 50 without chattering and smooth floating is brought about.

(11) The front cross ball receiving surface 64a of the cross guide 64 has the multiple front cross V grooves 64e. The rear cross ball receiving surface 64b has the multiple rear cross V grooves 64f. This suppresses inclination of the workpiece spindle 40, the cross guide 64, and the workpiece holding mechanism 50 relative to one another. Also, the rotational force acting on the grooves (43b, 64e, 64f) is dispersed.

(12) The front preloaded balls 62 and the rear preloaded balls 66 are provided between the corresponding parallel surfaces. The front preloaded balls 62 and the rear preloaded balls 66 are supported in a preloaded state by, for example, stainless steel balls with high circularity. This suppresses inclination of the workpiece holding mechanism 50 with respect to the workpiece spindle 40 and improves the dimension accuracy in the direction of the spindle axis C1. Since inclination of the workpiece holding mechanism 50 with respect to the workpiece spindle 40 is suppressed, adjustment through the C-axis adjustment screws 42b only involves translation of the workpiece axis C2. As a result, simply by arranging the C-axis adjustment screws 42b collectively at one spot in the direction of the C axis, the centering adjustment of the workpiece C2 is carried out.

(13) The group of the front preloaded balls 62 and the group of the rear preloaded balls 66 are each provided circumferentially around the spindle axis C1. The front preloaded balls 62 and the rear preloaded balls 66 thus support the workpiece holding mechanism 50 without allowing the workpiece holding mechanism 50 to incline. Also, the front preloaded balls 62 and the rear preloaded balls 66 are capable of moving the workpiece axis C2 in any direction perpendicular to the spindle axis C1. Further, the front preloaded balls 62 and the rear preloaded balls 66 permit rotation of the spindle axis C1 and the workpiece axis C2 relative to each other.

(14) By forming an urging portion by the four preload adjustment screws 45, the front preloaded balls 62, the front cross balls 63, the rear cross balls 65, and the rear preloaded balls 66 are preloaded with stable urging force, despite the compact configuration of the urging portion. Also, the preload adjustment screws 45 are adjustment portions each of which is capable of adjusting the preload. As a result, the preload adjustment screws 45 stably applies a proper level of preload to the balls (62, 63, 65, 66), despite the compact configuration. This ensures smooth floating and high dimension accuracy.

(15) The centripetal force generated by the front oil seal 61 and the rear oil seal 67 acts to cause the workpiece axis C1 to substantially coincide with the spindle axis C1. Further, since this reduces the adjustment range, the centering adjustment is rapidly carried out. Also, through such reduction of the adjustment range, the margin of the floating mechanism becomes small and, particularly, the front preloaded ball receiving surface 52c and the rear preloaded ball receiving surface 53c, which receive the front preloaded balls 62 and the rear preloaded balls 66, respectively, in such a manner that the balls 62 or the balls 66 are arranged annually, are reduced in size. This decreases the size and the weight of the floating mechanism.

(16) Since the support block 91 is a V block, the round bar-like workpiece W is stably supported at the accurate position despite the simple configuration of the support block 91.

The illustrated embodiment may be modified as follows.

Instead of the dial gauge 27, a non-contact measuring instrument that operates using interference of light, reflection of light, capacitance, or magnetism may be used. That is, any suitable measuring instrument may be employed as long as the instrument can detect displacement of the surface of the workpiece W.

The measurement value before reverse rotation of the workpiece spindle by 180 degrees and the measurement value after the reverse rotation may be measured not only when the horizontal position of the support block 91 is adjusted but also when, for example, the vertical position of the support block 91 is adjusted.

The adjustment procedures have been described by way of example and the horizontal adjustment may be omitted. The accuracy is preferably improved as a whole by repeating measurement and adjustment, including adjustment of the device.

The number of the C-axis adjustment screws 42b each serving as the workpiece axis fixing portion is not restricted to four but may be five or greater. Further, each workpiece axis fixing portion may be any other suitable component other than the C-axis adjustment screw 42b, such as a piezoelectric element, a mechanical wedge, or a component using hydraulic control, as long as the component is switchable between a permitting state, in which movement of the workpiece axis C2 is permitted, and a fixing state, in which the movement of the workpiece axis C2 is fixed.

The workpiece holding mechanism does not necessarily have to be the collet chuck mechanism. In other words, as long as floating of the workpiece W is ensured, the method of chucking the workpiece W may involve any other suitable operation such as tightening using hydraulic pressure or temperature difference, threading, or operation using magnetic force or negative pressure may be employed.

The support block 91, or the support member, may be any suitable member other than a V block, as long as the workpiece W is held without being displaced. As long as the position accuracy of the workpiece W is ensured, the support member may be a component that rollably supports the workpiece W, instead of slidably supporting the workpiece W.

The support locking portion does not necessarily have to be the workpiece stopper 92. That is, the shape or the mechanism of the support locking portion may be changed.

**Claims**

1. A machine tool (20) comprising:

   • a workpiece spindle (40) that is driven to rotate; and
   • a workpiece holding mechanism (50) that is adapted to hold a round bar-like workpiece (W), the workpiece (W) having a workpiece axis (C2), which is the axis of the workpiece (W), and a projecting portion that projects from the workpiece holding mechanism (50) when the workpiece (W) is held by the workpiece holding mechanism (50), the projecting portion having a side surface encompassing the workpiece axis (C2);
   • a floating mechanism (48, 52, 53, 60) that is adapted to transmit rotation of the workpiece spindle (40) to the workpiece holding mechanism (50), the floating mechanism (48, 52, 53, 60) being adapted to support the workpiece holding mechanism (50) in such a manner as to permit the workpiece holding mechanism (50) to move relative to the workpiece spindle (40);

   **characterized by**

   • a workpiece axis fixing portion (42b) that is adapted to fix the position of the workpiece axis (C2) at a desired position with respect to the workpiece spindle (40) by temporarily restricting the floating mechanism (48, 52, 53, 60);
   • a support member (91) that is adapted to rotatably support the side surface of the workpiece (W);
   • a support position adjustment portion (90) that is adapted to adjust the position at which the support member (91) supports the workpiece (W); and
   • a support locking portion (92) that is adapted to press the workpiece (W) in such a manner that the workpiece (W) is pressed against the support member (91), thereby maintaining a state in which the support member (91) determines the position of the workpiece axis (C2).

**2.** The machine tool (20) according to claim 1, **characterized in that**

  • the workpiece axis fixing portion (42b) includes a plurality of screws (42b) provided in the workpiece spindle (40) in such a manner that the screws (42b) are arranged on a circumference encompassing the workpiece holding mechanism (50),
  • each of the screws (42b) contacts the workpiece holding mechanism (50) by proceeding from the workpiece spindle (40) toward the workpiece axis (C2), each screw (42b) is adapted to be rotated to adjust the amount by which the screw (42b) proceeds from the workpiece spindle (40) toward the workpiece axis (C2), so as to be switchable between a state in which change of the position of the workpiece holding mechanism (50) relative to the workpiece spindle (40) is permitted and a state in which the change of the position is restricted.

**3.** The machine tool according to claims 1 or 2, **characterized in that**

  • the workpiece spindle (40) includes a spindle groove (43b), which is a linear groove extending parallel with a line perpendicular to the spindle axis (C1),
  • the workpiece holding mechanism (50) includes a holding groove (52f), which is a linear groove extending parallel with a line perpendicular to the workpiece axis (C2),
  • the floating mechanism (48, 52, 53, 60) includes a cross guide (64), which is a plate-like member,
  • the cross guide (64) includes a first cross surface (64a) and a second cross surface (64b) located opposite to the first cross surface (64a),
  • the first cross surface (64a) has a first cross groove (64e) facing the spindle groove (43b),
  • the second cross surface (64b) includes a second cross groove (64f) facing the holding groove (52f), and the second cross groove (64f) extends perpendicular to the first cross groove (64e) as viewed in the direction of the workpiece axis (C2),
  • the floating mechanism (48, 52, 53, 60) further includes a plurality of first cross balls (63) aligned linearly in the first cross groove (64e) and a plurality of second cross balls (65) aligned linearly in the second cross groove (64f), and
  • movement of the workpiece axis (C2) in a direction perpendicular to the spindle axis (C1) is permitted through rolling of the first cross balls (63) and the second cross balls (65).

**4.** The machine tool according to claim 3, **character-**

ized in that the spindle groove (43b), the holding groove (52f), the first cross groove (64e), and the second cross groove (64f) are V grooves each having a V-shaped cross section.

**5.** The machine tool according to claims 3 or 4, **characterized in that**

  • the first cross surface (64a) includes a plurality of rows of the first cross grooves (64e), and
  • the second cross surface (64b) includes a plurality of rows of the second cross grooves (64f).

**6.** The machine tool according to any one of claims 1 to 5, **characterized in that** the floating mechanism (48, 52, 53, 60) includes:

  • a first spindle surface (42c) and a second spindle surface (47b) formed in the workpiece spindle (40), the first spindle surface (42c) and the second spindle surface (47b) each being a flat surface;
  • a first holding surface (52c) and a second holding surface (53c) formed in the workpiece holding mechanism (50), the first holding surface (52c) and the second holding surface (53c) each extending perpendicular to the workpiece axis (C2);
  • a plurality of first preloaded balls (62) arranged between the first holding surface (52c) and the first spindle surface (42c);
  • a plurality of second preloaded balls (66) arranged between the second holding surface (53c) and the second spindle surface (47b); and
  • an urging portion (45) provided in the workpiece spindle (40), the urging portion (45) being adapted to urge the first preloaded balls (62) and the second preloaded balls (66) so as to support the workpiece holding mechanism (50), the workpiece holding mechanism (50) being permitted to move only in a direction perpendicular to the workpiece axis (C2) relative to the workpiece spindle (40).

**7.** The machine tool according to claim 6 **characterized in that** the first spindle surface (42c), the second spindle surface (47b), the first holding surface (52c), and the second holding surface (53c) each have an annular shape, and

  • wherein the first preloaded balls (62) are arranged annularly and the second preloaded balls (66) are arranged annularly.

**8.** The machine tool according to claims 6 or 7 **characterized in that** the urging portion (45) is a screw, the urging force by which the screw (45) urges the first preloaded balls (62) and the second preloaded balls (66) being adjustable.

9. The machine tool according to any one of claims 1 to 8, further comprising an oil seal (61, 67) formed by an annular elastic body arranged between the workpiece spindle (40) and the workpiece holding mechanism (50), wherein the oil seal (61, 67) is adapted to apply a centripetal force to the workpiece holding mechanism (50) in such a manner that the axis (C2) of the workpiece holding mechanism (50) approaches the spindle axis (C1).

10. The machine tool according to any one of claims 1 to 9, **characterized in that** the support member (91) is configured by a V block having a V groove.

11. The machine tool according to any one of claims 1 to 10, **characterized in that** the machine tool is a tool grinder (20).

12. The machine tool according to any one of claims 1 to 11, **characterized in that** the workpiece (W) is a workpiece of an end mill or a drill.

13. The machine tool according to claim 12, **characterized in that** the tool diameter of the distal end of the end mill or the drill falls in the range of 0.001 mm to 6.00 mm.

14. The machine tool according to claims 12 or 13, **characterized in that** the shank diameter of the end mill or the drill (W) falls in the range of 0.5 mm to 6 mm.

15. An adjustment method of a machine tool (20) according to claim 1:
wherein the adjustment method comprises:

    • an axis position adjustment procedure (S5) in which runout of the side surface of the workpiece (W) is measured while rotating the workpiece spindle (40) with the workpiece holding mechanism (50) holding the workpiece (W) and the support member (91) not holding the workpiece (W), and the workpiece axis fixing portion (42b) is adjusted in such a manner that the runout is minimized;
    • a support adjustment procedure (S6) in which the support position adjustment portion (90) is adjusted in such a manner that the support member (91) supports the workpiece (W) while the position of the workpiece axis (C2) is fixed with respect to the workpiece spindle (40) by means of the workpiece axis fixing portion (42b);
    • a support locking procedure (S7) in which the workpiece (W) is pressed by the support locking portion (92) after the support adjustment procedure (S6); and
    • a floating restriction canceling procedure (S8) in which restriction on the floating mechanism (48, 52, 53, 60) by the workpiece axis fixing portion (42b) is canceled after the support locking procedure (S7).

16. The adjustment method according to claim 15, **characterized in that** the machine tool (20) includes:

    • a tool spindle table (26) and
    • a dial gauge (27) removably attached to the tool spindle table (26),

wherein the axis position adjustment procedure (S5) includes:

    • reading a maximum value and a minimum value of a measurement value of the dial gauge (27) in one rotation of the workpiece spindle (40) by measuring the position of the side surface of the workpiece (W) using the dial gauge (27); and
    • adjusting a radial position of the workpiece (W) with respect to the workpiece spindle (40) in such a manner that the measurement value becomes equal to the average of the maximum value and the minimum value.

17. The adjustment method according to claim 16, further comprising horizontal adjustment (S10) performed after the floating restriction canceling procedure (S8), the axis of the workpiece spindle (40) being referred to as a spindle axis (C1), wherein the horizontal adjustment (S10) includes:

    • obtaining a measurement value before reverse rotation by measuring the position of the side surface of the workpiece (W) in a horizontal direction with respect to the spindle axis (C1);
    • rotating the workpiece spindle (40) in a reverse direction in such a manner that the spindle axis (C1) is rotated in the reverse direction by 180 degrees;
    • obtaining a measurement value after the reverse rotation by measuring the position of the side surface of the workpiece (W) after the reverse rotation; and
    • moving the support member (91) in the horizontal direction in such a manner that the measurement value becomes equal to the average of the measurement value before the reverse rotation and the measurement value after the reverse rotation.

18. The adjustment method according to claims 16 or 17, **characterized in that** the maximum value and the minimum value are measured at a distal end of the workpiece (W).

19. The adjustment method according to any one of claims 15 to 18 **characterized in that** a test piece (TP) having a target accuracy in advance is employed instead of the workpiece (W).

## Patentansprüche

1. Werkzeugmaschine (20) aufweisend:

    - eine zur Rotation angetriebene Werkstückspindel (40); und
    - einen Werkstück-Haltemechanismus (50), der geeignet ist, ein rundes, stabähnliches Werkstück (W) zu halten, wobei das Werkstück (W) eine Werkstückachse (C2) hat, die die Achse des Werkstücks (W) ist, und einen vorstehenden Abschnitt aufweist, der von dem Werkstück Haltemechanismus (50) vorsteht, wenn das Werkstück (W) von der Werkstück-Haltevorrichtung (50) gehalten wird, wobei der vorstehende Abschnitt eine die Werkstückachse (C2) umgebende Seitenoberfläche hat;
    - einen Schwimm-Mechanismus (48, 52, 53, 60), der geeignet ist, die Rotation der Werkstückspindel (40) auf den Werkstück-Haltemechanismus (50) zu übertragen, wobei der Schwimm-Mechanismus (48, 52, 53, 60) geeignet ist, den Werkstück-Haltemechanismus (50) derart zu stützen, dass eine Bewegung des Werkstück-Haltemechanismus (50) relativ zur Werkstückspindel (40) zugelassen ist;

    **gekennzeichnet, durch**

    - einen Werkstückachsen-Fixierabschnitt (42b), der geeignet ist, **durch** zeitweises Begrenzen des Schwimm-Mechanismus (48, 52, 53 60) die Position der Werkstückachse (C2) bezüglich der Werkstückspindel (40) in einer Sollposition zu fixieren;
    - ein Stützglied (91), das geeignet ist, drehbar die Seitenoberfläche des Werkstücks (W) zu stützen;
    - einen Stützposition-Einstellabschnitt (90), der geeignet ist, die Position, in der das Stützglied (91) das Werkstück (W) stützt, einzustellen; und
    - einen Stütz-Feststellabschnitt (92), der geeignet ist, auf das Werkstück (W) derart zu pressen, dass das Werkstück (W) gegen das Stützglied (91) gepresst wird, wodurch ein Zustand aufrechterhalten wird, in dem das Stützglied (91) die Lage der Werkstückachse (C2) festlegt.

2. Werkzeugmaschine (20) nach Anspruch 1, **dadurch gekennzeichnet, dass**

    - der Werkstückachsen-Fixierabschnitt (42b) eine Mehrzahl von Schrauben (42b) aufweist, die in der Werkstückspindel (40) derart angeordnet sind, dass die Schrauben (42b) an einem die Werkstück-Haltevorrichtung (50) umgebenden Umfang angeordnet sind,
    - jede der Schrauben (42b) Berührung hat mit der Werkstück-Haltevorrichtung (50) durch Erstrecken von der Werkstückspindel (40) hin zu der Werkstückachse (C2), wobei jede Schraube (42b) gedreht werden kann, um den Betrag, um welchen sich die Schraube (42b) von der Werkstückspindel (40) hin zur Werkstückachse (C2) erstreckt, so einzustellen, dass er zwischen einem Zustand, in welchem eine Änderung der Position der Werkstück-Haltevorrichtung (50) relativ zu der Werkstückspindel (40) erlaubt ist, und einem Zustand, in welchem die Änderung der Position eingeschränkt ist, verändert werden kann.

3. Werkzeugmaschine nach Anspruch 1 oder 2, **dadurch gekennzeichnet, dass**

    - die Werkstückspindel (40) eine Spindelausnehmung (43b) aufweist, welche eine geradlinige Ausnehmung ist, die sich parallel zu einer im rechten Winkel zu der Spindelachse (C1) verlaufenden Linie erstreckt,
    - die Werkstück-Haltevorrichtung (50) eine Halteausnehmung (52f) aufweist, welche eine lineare Ausnehmung ist, die sich parallel zu einer im rechten Winkel zu der Werkstückachse (C2) verlaufenden Linie erstreckt,
    - der Schwimm-Mechanismus (48, 52, 53, 60) eine Querführung (64) aufweist, die ein plattenähnliches Glied ist,
    - die Querführung (64) eine erste Querfläche (64a) und eine der ersten Querfläche (64a) entgegengesetzte zweite Querfläche (64b) aufweist,
    - die erste Querfläche (64a) eine erste der Spindelausnehmung (43b) zugewandte Querausnehmung (64e) aufweist,
    - die zweite Querfläche (64b) eine zweite der Halteausnehmung (52f) zugewandte Querausnehmung (64f) aufweist, und sich die zweite Querausnehmung (64f) im rechten Winkel zu der ersten Querausnehmung (64e) erstreckt, die in die Richtung der Werkstückachse (C2) zeigt,
    - der Schwimm-Mechanismus (48, 52, 53, 60) zusätzlich eine Mehrzahl erster linear in der ersten Querausnehmung (64e) ausgerichteter Querkugeln (63) und eine Mehrzahl zweiter linear in der zweiten Querausnehmung (64f) ausgerichteter Querkuglen (65) aufweist, und
    - durch Rollen der ersten Querkugeln (63) und der zweiten Querkugeln (65) eine Bewegung der Werkstückachse (C2) in eine im rechten Winkel zu der Spindelachse (C1) verlaufende Richtung erlaubt.

4. Werkzeugmaschine nach Anspruch 3, **dadurch gekennzeichnet, dass** die Spindelausnehmung (43b), die Halteausnehmung (52f), die erste Querausnehmung (64e) und die zweite Querausnehmung (64f) V-Ausnehmungen sind, von denen jede eine V-förmige Querausnehmung aufweist.

5. Werkzeugmaschine nach Anspruch 3 oder 4, **dadurch gekennzeichnet dass**,

   - die erste Querfläche (64a) eine Mehrzahl von Reihen der ersten Querausnehmungen (64e) aufweist, und
   - die zweite Querfläche (64b) eine Mehrzahl von Reihen der zweiten Querausnehmungen (64f) aufweist.

6. Werkzeugmaschine nach einem der Ansprüche 1 bis 5, **dadurch gekennzeichnet, dass** der Schwimm-Mechanismus (48, 52, 53, 60) aufweist:

   - eine in der Werkstückspindel (40) ausgebildete erste Spindelfläche (42c) und eine zweite Spindelfläche (47b), wobei die erste Spindelfläche (42c) und die zweite Spindelfläche (47b) jeweils eine glatte Fläche ist;
   - eine in der Werkstück-Haltevorrichtung (50) ausgebildete erste Haltefläche (52c) und eine zweite Haltefläche (53c), wobei sich die erste Haltefläche (52c) und die zweite Haltefläche (53c) jeweils im rechten Winkel zu der Werkstückachse (C2) erstreckt.
   - eine Mehrzahl von ersten zwischen der ersten Haltefläche (52c) und der ersten Spindelfläche (42c) angeordneten vorbelasteten Kugeln (62);
   - eine Mehrzahl von zweiten zwischen der zweiten Haltefläche (53c) und der zweiten Spindelfläche (47b) angeordneter vorbelasteter Kugeln (66);
   - einen in der Werkstückspindel (40) angeordneten Zwangskopplungsabschnitt (45), wobei der Zwangskopplungsabschnitt (45) geeignet ist, die ersten vorbelasteten Kugeln (62) und die zweiten vorbelsteten Kugeln (66) zur Stützung der Werkstück-Haltevorrichtung (50) zu zwingen, wobei der Werkstück-Haltevorrichtung (50) nur eine Bewegung relativ zu der Werkstückspindel (40) in eine im rechten Winkel zur Werkstückachse (C2) verlaufenden Richtung erlaubt ist.

7. Werkzeugmaschine nach Anspruch 6, **dadurch gekennzeichnet, dass** die erste Spindelfläche (42c), die zweite Spindelfläche (47b), die erste Haltefläche (52c) und die zweite Haltefläche (53c) jeweils ringförmig gebildet sind, und

   - wobei die ersten vorbelasteten Kugeln (62) ringförmig angeordnet sind und die zweiten vorbelasteten Kugeln (66) ringförmig angeordnet sind.

8. Werkzeugmaschine nach Anspruch 6 oder 7, **dadurch gekennzeichnet, dass** der Zwangskopplungsabschnitt (45) eine Schraube ist, wobei die Zwangskraft, mit der die Schraube (45) die ersten vorbelasteten Kugeln (62) und die zweiten vorbelasteten Kugeln (66) zwingt, einstellbar ist.

9. Werkzeugmaschine nach einem der Ansprüche 1 bis 8, ferner aufweisend eine zwischen der Werkstückspindel (40) und der Werkstück-Haltevorrichtung (50) angeordnete als ringförmiger elastischer Körper hergestellte Öldichtung (61, 67), wobei die Öldichtung (61, 67) geeignet ist, eine Zentripetalkraft auf die Werkstück-Haltevorrichtung (50) derart auszuüben, dass sich die Achse (C2) der Werkstück-Haltevorrichtung (50) der Spindelachse (C1) annähert.

10. Werkzeugmaschine nach einem der Ansprüche 1 bis 9, **dadurch gekennzeichnet, dass** das Stützglied (91) aus einem eine V-Ausnehmung aufweisenden V-Block gebildet ist.

11. Werkzeug nach einem der Ansprüche 1 bis 10, **dadurch gekennzeichnet, dass** die Werkzeugmaschine ein Schleifwerkzeug (20) ist.

12. Werkzeugmaschine nach einem der Ansprüche 1 bis 11, **dadurch gekennzeichnet, dass** das Werkstück (W) ein Werkstück eines Schaftfräsers oder Bohrers ist.

13. Werkzeugmaschine nach Anspruch 12, **dadurch gekennzeichnet, dass** der Werkzeugdurchmesser des Distalendes des Schaftfräsers oder des Bohrers in dem Bereich von 0,001 mm bis 6,00 mm liegt.

14. Werkzeugmaschine nach Anspruch 12 oder 13, **dadurch gekennzeichnet, dass** der Schaftdurchmesser des Schaftfräsers oder des Bohrers (W) in dem Bereich von 0,5 mm bis 6 mm liegt.

15. Ein Einstellverfahren der Werkzeugmaschine (20) nach Anspruch 1, wobei das Einstellverfahren aufweist:

   - einen Achsenposition-Einstellungsschritt (S5), in dem ein Ausschlagen der Seitenfläche des Werkstücks (W) erfasst wird, während die Werkstückspindel (40) rotiert und die Werkstück-Haltevorrichtung (50) das Werkstück (W) hält und das Stützglied (91) das Werkstück (W) nicht hält, und in dem der Werkstückachsen-Fixierabschnitt (42b) derart eingestellt ist, dass das Ausschlagen minimiert wird;

- einen Stütz-Einstellungsschritt (S6), bei dem der Stützpositions-Einstellabschnitt (90) derart eingestellt wird, dass das Stützglied (91) das Werkstück (W) stützt, während die Position der Werkstückachse (C2) bezüglich der Werkstückspindel (40) durch den Werkstückachsen-Fixierabschnitt (42b) fixiert wird;

- einen Stütz-Feststellschritt (S7), in dem das Werkstück (W) von dem Stütz-Feststellabschnitt (92) nach dem Stütz-Einstellungsschritt (S6) gepresst wird; und

- einen Schwimmbegrenzung-Aufhebungsschritt (S8), bei dem die Begrenzung des Schwimm-Mechanismus (48, 52, 53, 60) von dem Werkstückachsen-Fixierabschnitt (42b) nach dem Stütz-Feststellschritt (S7) aufgehoben wird.

16. Einstellverfahren nach Anspruch 15, **dadurch gekennzeichnet, dass** das Maschinenwerkzeug (20) aufweist:

- einen Werkzeugspindeltisch (26) und
- einen entfernbar an dem Werkzeugspindeltisch (26) angebrachten Feinanzeiger (27), wobei der Achsenposition-Einstellungsschritt (S5) aufweist:
- Auslesen eines Höchstwerts und eines Mindestwerts eines Messwerts des Feinanzeigers (27) in einer Rotation der Werkstückspindel (40) durch Ermitteln der Position der Seitenfläche des Werkstücks (W) unter Verwendung des Feinanzeigers (27); und
- derartiges Anpassen einer radialen Lage des Werkstücks (W) bezüglich der Werkstückspindel (40), dass der Messwert gleich dem Durchschnitt des Höchstwerts und dem des Mindestwerts wird.

17. Einstellverfahren nach Anspruch 16, weiterhin aufweisend eine nach dem Schwimmbegrenzung-Aufhebungsschritt (S8) ausgeführte horizontale Einstellung (S10), wobei die Achse der Werkstückspindel (40) als eine Spindelachse (C1) bezeichnet wird, wobei die horizontale Einstellung (S10) aufweist:

- Erhalten eines Messwerts vor entgegengesetzter Rotation durch Ermitteln der Position der Seitenfläche des Werkstücks (W) in einer horizontalen Richtung bezüglich der Spindelachse (C1);
- derartiges Rotieren der Werkstückspindel (40) in eine entgegengesetzte Richtung, dass die Spindelachse (C1) um 180 Grad in die entgegengesetzte Richtung rotiert wird;
- Erhalten eines Messwerts nach der entgegengesetzten Rotation durch Ermitteln der Position der Seitenfläche des Werkstücks (W) nach der entgegengesetzten Rotation; und
- derartiges Bewegen des Stützglieds (91) in die horizontale Richtung, dass der Messwert gleich wird dem Durchschnitt des Messwerts vor der entgegengesetzten Rotation und dem Messwert nach der entgegengesetzten Rotation.

18. Einstellverfahren nach Anspruch 16 oder 17, **dadurch gekennzeichnet, dass** der Höchstwert und der Mindestwert an einem Distalende des Werkstücks (W) ermittelt werden.

19. Einstellverfahren nach einem der Ansprüche 15 bis 18, **dadurch gekennzeichnet, dass** ein Teststück (TP) mit einer Zielgenauigkeit zuvor anstelle des Werkstücks (W) eingesetzt wird.

**Revendications**

1. Machine-outil (20) comprenant :

- une broche porte-pièce (40) qui est entraînée pour tourner ; et
- un mécanisme de fixation de pièce (50) qui est adapté pour fixer une pièce ronde semblable à une barre (W), la pièce (W) présentant un axe de pièce (C2) qui est l'axe de la pièce (W), et une partie en saillie qui fait saillie du mécanisme de fixation de pièce (50) lorsque la pièce (W) est maintenue par le mécanisme de fixation de pièce (50), la partie en saillie présentant une surface latérale entourant l'axe de pièce (C2) ;

un mécanisme flottant (48, 52, 53, 60) qui est adapté pour transmettre la rotation de la broche porte-pièce (40) au mécanisme de fixation de pièce (50), le mécanisme flottant (48, 52, 53, 60) étant adapté pour supporter le mécanisme de fixation de pièce (50) de manière à permettre au mécanisme de fixation de pièce (50) de se déplacer par rapport à la broche porte-pièce (40) ;
**caractérisé par**
une partie de fixation de l'axe de pièce (42b) qui est adaptée pour fixer la position de l'axe de pièce (C2) à une position souhaitée par rapport à la broche porte-pièce (40) en restreignant temporairement le mécanisme flottant (48, 52, 53, 60) ;

- un élément de support (91) qui est adapté pour supporter de manière à pouvoir tourner la surface latérale de la pièce (W) ;
- une partie de réglage de la position du support (90) qui est adaptée pour régler la position à laquelle l'élément de support (91) supporte la pièce (W) ; et

- une partie de verrouillage du support (92) qui est adaptée pour appuyer la pièce (W) de telle façon que la pièce (W) soit appuyée contre l'élément de support (91), maintenant ainsi un état dans lequel l'élément de support (91) détermine la position de l'axe de pièce (C2).

2. Machine-outil (20) selon la revendication 1, **caractérisée en ce que**

   - la partie de fixation de l'axe de pièce (42b) comprend une pluralité de vis (42b) prévue dans la broche porte-pièce (40) de telle façon que les vis (42b) sont agencées sur une circonférence entourant le mécanisme de fixation de pièce (50),
   - chacune des vis (42b) contacte le mécanisme de fixation de pièce (50) en partant de la broche porte-pièce (40) vers l'axe de pièce (C2), chaque vis (42b) est adaptée pour être tournée pour régler la quantité à laquelle la vis (42b) avance de la broche porte-pièce (40) vers l'axe de pièce (C2), de façon à pouvoir passer entre un état dans lequel le changement de la position du mécanisme de fixation de pièce (50) par rapport à la broche porte-pièce (40) est autorisé et un état dans lequel le changement de position est restreint.

3. Machine-outil selon la revendication 1 ou 2, **caractérisée en ce que**

   - la broche porte-pièce (40) comprend une rainure de broche (43b) qui une rainure linéaire s'étendant parallèlement avec une ligne perpendiculaire à l'axe de broche (C1),
   - le mécanisme de fixation de pièce (50) comprend une rainure de fixation (52f) qui est une rainure linéaire s'étendant parallèlement avec une ligne perpendiculaire à l'axe de pièce (C2),
   - le mécanisme flottant (48, 52, 53, 60) comprend un guide transverse (64) qui est un élément semblable à une plaque,
   - le guide transverse (64) comprend une première surface transverse (64a) et une seconde surface transverse (64b) située à l'opposé de la première surface transverse (64a),
   - la première surface transverse (64a) présente une première rainure transverse (64e) face à la rainure de broche (43b),
   - la seconde surface transverse (64b) comprend une seconde rainure transverse (64f) face à la rainure de fixation (52f), et la seconde rainure transverse (64f) s'étend perpendiculairement à la première surface transverse (64a) vu dans la direction de l'axe de pièce (C2),

- le mécanisme flottant (48, 52, 53, 60) comprend en outre une pluralité de premières billes transverses (63) alignées de manière linéaire dans la première rainure transverse (64e) et une pluralité de secondes billes transverses (65) alignées de manière linéaire dans la seconde rainure transverse (64f), et
- le mouvement de l'axe de pièce (C2) dans une direction perpendiculaire à l'axe de broche (C1) est permis en faisant rouler les premières billes transverses (63) et les secondes billes transverses (65).

4. Machine-outil selon la revendication 3, **caractérisée en ce que** la rainure de broche (43b), la rainure de fixation (52f), première rainure transverse (64e) et la seconde rainure transverse (64f) sont des rainures en V présentant chacune une section transversale en V.

5. Machine-outil selon l'une des revendications 3 ou 4, **caractérisée en ce que**

   - la première surface transverse (64a) comprend une pluralité de rangées des premières rainures transverses (64e), et
   - la seconde surface transverse (64b) comprend une pluralité de rangées des secondes rainures transverses (64f).

6. Machine-outil selon l'une quelconque des revendications 1 à 5, **caractérisée en ce que** le mécanisme flottant (48, 52, 53, 60) comprend :

   - une première surface de broche (42c) et une seconde surface de broche (47b) formées dans la broche porte-pièce (40), la première surface de broche (42c) et la seconde surface de broche (47b) étant chacune une surface plane ;
   - une première surface de fixation (52c) et une seconde surface de fixation (53c) formées dans le mécanisme de fixation de pièce (50), la première surface de fixation (52c) et la seconde surface de fixation (53c) s'étendant chacune perpendiculairement à l'axe de pièce (C2) ;
   - une pluralité de premières billes préchargées (62) agencées entre la première surface de fixation (52c) et la première surface de broche (42c) ;
   - une pluralité de secondes billes préchargées (66) agencées entre la seconde surface de fixation (53c) et la seconde surface de broche (47b) ; et
   - une partie de sollicitation (45) prévue dans la broche porte-pièce (40), la partie de sollicitation (45) étant adaptée pour solliciter les premières billes préchargées (62) et les secondes billes préchargées (66) de façon à supporter le mécanisme de fixation de pièce (50), le mécanisme de fixation de pièce (50) pouvant se déplacer uniquement dans une direction perpendiculaire à l'axe de pièce (C2) par rapport à la broche porte-pièce (40).

7. Machine-outil selon la revendication 6, **caractérisée en ce que** la première surface de broche (42c), la seconde surface de broche (47b), la première surface de fixation (52c) et la seconde surface de fixation (53c) présentent chacune une forme annulaire, et

   - sachant que les premières billes préchargées (62) sont agencées de manière annulaire et les secondes billes préchargées (66) sont agencées de manière annulaire.

8. Machine-outil selon les revendications 6 ou 7, **caractérisée en ce que** la partie de sollicitation (45) est une vis, la force de sollicitation avec laquelle la vis (45) sollicite les premières billes préchargées (62) et les secondes billes préchargées (66) étant réglable.

9. Machine-outil selon l'une quelconque des revendications 1 à 8, comprenant en outre un joint d'huile (61, 67) formé par un corps élastique annulaire agencé entre la broche porte-pièce (40) et le mécanisme de fixation de pièce (50), sachant que le joint d'huile (61, 67) est adapté pour appliquer une force centripète au mécanisme de fixation de pièce (50) de telle façon que l'axe (C2) du mécanisme de fixation de pièce (50) s'approche de l'axe de broche (C1).

10. Machine-outil selon l'une quelconque des revendications 1 à 9, **caractérisée en ce que** l'élément de support (91) est configuré par un bloc en V présentant une rainure en V.

11. Machine-outil selon l'une quelconque des revendications 1 à 10, **caractérisée en ce que** la machine-outil est un affûteur d'outil (20).

12. Machine-outil selon l'une quelconque des revendications 1 à 11, **caractérisée en ce que** la pièce (W) est une pièce d'une fraise ou d'un foret.

13. Machine-outil selon la revendication 12, **caractérisée en ce que** le diamètre d'outil de l'extrémité distale de la fraise ou du foret se situe dans la plage de 0,001 à 6,00 mm.

14. Machine-outil selon les revendications 12 ou 13, **caractérisée en ce que** le diamètre de queue de la fraise ou le foret (W) se situe dans la plage de 0,5 mm à 6 mm.

15. Procédé de réglage d'une machine-outil (20) selon la revendication 1, sachant que le procédé de réglage comprend

   - une procédure de réglage de la position de l'axe (S5) dans laquelle le faux-rond de la surface latérale de la pièce (W) est mesuré tout en tournant la broche porte-pièce (40) avec le mécanisme de fixation de pièce (50) maintenant la pièce (W) et l'élément de support (91) ne maintenant pas la pièce (W), et la partie de fixation de l'axe de pièce (42b) est réglée de telle manière que le faux-rond est réduit au minimum :
   - une procédure de réglage du support (S6) dans laquelle la partie de réglage de la position du support (90) est réglée de telle manière que l'élément de support (91) supporte la pièce (W) alors que la position de l'axe de pièce (C2) est fixée par rapport à la broche porte-pièce (40) via la partie de fixation de l'axe de pièce (42b) ;
   - une procédure de verrouillage du support (S7) dans laquelle la pièce (W) est appuyée par la partie de verrouillage du support (92) après la procédure de réglage du support (S6) ; et
   - une procédure d'annulation de restriction du flottement (S8) dans laquelle la restriction sur le mécanisme flottant (48, 52, 53, 60) par la partie de fixation de l'axe de pièce (42b) est annulée après la procédure de verrouillage du support (S7).

16. Procédé de réglage selon la revendication 15, **caractérisé en ce que** la machine-outil (20) comprend :

   - une table de broche d'outil (26) et
   - un manomètre à cadran (27) fixé de manière à pouvoir être enlevé sur la table de broche d'outil (26),

   dans lequel la procédure de réglage de la position de l'axe (S5) comprend :

   - la lecture d'une valeur maximale et d'une valeur minimale d'une valeur de mesure du manomètre à cadran (27) en une rotation de la broche porte-pièce (40) en mesurant la position de la surface latérale de la pièce (W) à l'aide du manomètre à cadran (27) ; et
   - le réglage d'une position radiale de la pièce (W) par rapport à la broche porte-pièce (40) de façon à ce que la valeur de mesure devienne égale à la moyenne de la valeur maximale et de la valeur minimale.

17. Procédé de réglage selon la revendication 16, comprenant en outre le réglage horizontal (S10) effectué après la procédure d'annulation de restriction du flottement (S8), en faisant référence à l'axe de la broche porte-pièce (40) en tant qu'axe de broche (C1), dans lequel le réglage horizontal (S10) comprend :

- l'obtention d'une valeur de mesure avant la rotation inverse en mesurant la position de la surface latérale de la pièce (W) dans une direction horizontale par rapport à l'axe de broche (C1) ;
- la rotation de la broche porte-pièce (40) dans une direction inverse de telle sorte que l'axe de broche (C1) est tourné de 180° dans la direction inverse ;
- l'obtention d'une valeur de mesure après la rotation inverse en mesurant la position de la surface latérale de la pièce (W) après la rotation inverse ; et le déplacement de l'élément de support (91) dans la direction horizontale de telle sorte que la valeur de mesure devienne égale à la moyenne de la valeur de mesure avant la rotation inverse et à la valeur de mesure après la rotation inverse.

18. Procédé de réglage selon les revendications 16 ou 17, **caractérisé en ce que** la valeur maximale et la valeur minimale sont mesurées à une extrémité distale de la pièce (W).

19. Procédé de réglage selon l'une quelconque des revendications 15 à 18, **caractérisé en ce qu'**une pièce de test (TP) présentant une précision cible en avance est employée au lieu de la pièce (W).

# Fig.1

# Fig.2

# Fig.3

EP 2 311 600 B1

# Fig.4

# Fig.5

EP 2 311 600 B1

# Fig.6

# Fig.7

EP 2 311 600 B1

# Fig.8(a)  Fig.8(b)  Fig.8(c)

64e
64d
64c
64a
64e
64a
C3
64
64e
64d
64a
64b
64e
64
64f
64f
64b
64b

# Fig.9

48
44
44a
44b
49
43b 43
43b 43a
43c
45
46
47a
47b
C1
47c
47

**Fig.10**

**Fig.11**

# Fig.12

# Fig.13

# Fig.14

# Fig.15

**Fig.16**

**Fig.17**

# Fig.18

Start

S1 — Workpiece mounted?
- NO → Mount workpiece (S2)
- YES ↓

S3 — C-axis adjustment screws tightened?
- NO → Temporarily tighten C-axis adjustment screws (S4)
- YES ↓

Axis position adjustment (S5)

Support adjustment (S6)

Support locking (S7)

Floating restriction cancellation (S8)

S9 — Measurement values in target range?
- NO ↑
- YES ↓

Horizontal adjustment (S10)

S11 — Measurement values in target range?
- NO ↑
- YES ↓

End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8118234 A

- JP 2003145326 A

**Non-patent literature cited in the description**

- Mecha-Idea Dictionary. Nikkei Business Publications, Inc, 1993, 94-95